Europäisches Patentamt

European Patent Office

Office européen des brevets

(19)

(11) EP 0 758 477 B1

(12) FASCICULE DE BREVET EUROPEEN

(45) Date de publication et mention
de la délivrance du brevet:
**14.01.1998 Bulletin 1998/03**

(21) Numéro de dépôt: 95918663.6

(22) Date de dépôt: 02.05.1995

(51) Int Cl.6: **G09B 23/28**, G06T 17/30

(86) Numéro de dépôt international:
**PCT/FR95/00571**

(87) Numéro de publication internationale:
**WO 95/30978 (16.11.1995 Gazette 1995/49)**

(54) **DISPOSITIF ET PROCEDE DE SIMULATION D'UN EXAMEN OU D'UNE OPERATION CHIRURGICALE EFFECTUEE SUR UN ORGANE SIMULE**

VORRICHTUNG UND VERFAHREN ZUR SIMULATION EINER UNTERSUCHUNG ODER EINES CHIRURGISCHEN EINGRIFFS AN SIMULIERTEN ORGANEN

DEVICE AND METHOD FOR SIMULATING AN EXAMINATION OF OR SURGICAL OPERATION ON A SIMULATED ORGAN

(84) Etats contractants désignés:
**AT BE CH DE DK ES FR GB GR IE IT LI LU MC NL PT SE**

(30) Priorité: **04.05.1994 FR 9405487**

(43) Date de publication de la demande:
**19.02.1997 Bulletin 1997/08**

(73) Titulaires:
• **UNIVERSITE DE LILLE II**
**59800 Lille (FR)**
• **CENTRE HOSPITALIER REGIONAL ET UNIVERSITAIRE DE LILLE**
**59037 Lille Cédex (FR)**
• **UNIVERSITE DES SCIENCES ET TECHNOLOGIES DE LILLE**
**59655 Villeneuve d'Ascq Cedex (FR)**

(72) Inventeurs:
• **DUBOIS, Patrick**
**F-59800 Lille (FR)**
• **ROULAND, Jean-François**
**F-59800 Lille (FR)**
• **CHAILLOU, Christophe**
**F-59800 Lille (FR)**
• **KARPF, Sylvain**
**F-59800 Lille (FR)**
• **MESEURE, Philippe**
**F-59800 Lille (FR)**

(74) Mandataire: **Gutmann, Ernest**
**Ernest Gutmann - Yves Plasseraud S.A.**
**3, rue Chauveau-Lagarde**
**75008 Paris (FR)**

(56) Documents cités:
WO-A-93/16631                    US-A- 4 947 474
US-A- 5 029 220

• CHIP ZEITSCHRIFT FUER MIKROCOMPUTER-TECHNIK, no.6, Juin 1993, WURZBURG DE pages 48 - 51 TH. BRANDENBURG 'eine leiche macht karriere'
• BIOMEDIZINISCHE TECHNIK, vol.39, no.1/2, Janvier 1994, BERLIN DE pages 27 - 30 H. ZENZ ET AL. 'Interaktives, multimediales Lernsystem zum Studium des Primären Offenwinkelglaukoms'

## Description

La présente invention concerne un dispositif et un procédé de simulation d'un examen et/ou d'une opération chirurgicale effectuée par un opérateur sur un organe simulé.

Par organe on entend toute partie nettement délimitée d'un corps vivant qui remplit une fonction déterminée, tel qu'un oeil, une oreille, un nez, etc.

Elle trouve une application particulièrement importante, bien que non exclusive, dans le domaine de l'ophtalmologie, dans le cadre de l'apprentissage de l'examen de l'oeil et du traitement d'un fond d'oeil par photo-coagulation à l'aide d'un rayonnement laser.

On sait que l'examen de l'oeil, tout comme la technique chirurgicale de photo-coagulation par impact d'un rayonnement laser, utilise un dispositif comprenant un appareil appelé bio-microscope comportant un binoculaire, une optique de grossissement, une source d'éclairage de l'oeil (lampe à fente) et, s'il y a lieu, une source de rayonnement laser dans le cas d'un appareil équipé pour le traitement de l'oeil par photo-coagulation.

L'appareil est activé par un système à palonnier disposé sur une table d'examen.

Le dispositif comprend également un verre d'examen agencé pour être manipulé par l'opérateur effectuant l'examen. Le verre d'examen est posé directement sur la cornée et sa constitution optique permet d'observer les différentes régions de l'oeil.

Actuellement, la formation ou l'enseignement dans le domaine de l'examen de l'oeil et du traitement par rayonnement laser ne peut se faire qu'à l'occasion des interventions pratiquées sur des patients.

Cette pratique présente l'inconvénient de limiter la formation à la seule connaissance des pathologies rencontrées.

De plus, elle comporte des risques de traumatismes que peuvent entraîner les erreurs de manipulation du laser.

Une autre méthode d'apprentissage consiste à utiliser des yeux fantômes en porcelaine. Une telle méthode se limite cependant à la seule observation et ne permet pas d'évaluer au préalable les effets d'un rayonnement laser dans certaines circonstances particulières.

L'invention a pour but de remédier à ces inconvénients en proposant un dispositif et un procédé répondant mieux que ceux antérieurement connus aux exigences de la pratique, notamment en ce qu'ils ne nécessitent plus d'intervenir sur l'organe véritable, et en ce qu'elle permet de dissocier véritablement l'acte thérapeutique de l'acte d'apprentissage.

Dans ce but, l'invention propose essentiellement un dispositif de simulation d'une intervention sur un organe par un opérateur, caractérisé en ce qu'il comporte

- un binoculaire d'observation de l'organe connu en lui même, muni d'un système de palonnier actionnable manuellement par l'opérateur, ledit système étant agencé pour déplacer le binoculaire dans un repère trirectangle Ox, Oy, Oz,
- des moyens de simulation d'une lampe à fente et des moyens de simulation des moyens de réglage du dimensionnement de ladite lampe à fente, propre à éclairer l'organe,
- des moyens de simulation d'une optique de grossissement,
- un ou deux écrans vidéo miniaturisés solidaires du binoculaire,
- des moyens de calcul propres à générer une image vidéo de l'organe simulé à examiner et à projeter ladite image sur le ou lesdits écrans vidéo miniaturisés,
- et des moyens de simulation d'un verre d'examen de l'organe muni de moyens d'actionnement manuel par un opérateur agencés pour simuler le déplacement relatif dudit verre d'examen simulé, par rapport à ladite image vidéo,

lesdits moyens de simulation et lesdits moyens de calcul étant agencés pour que le changement de l'un quelconque des paramètres relatifs au déplacement du binoculaire, au réglage de la lampe à fente, au grossissement et au verre d'examen, modifie l'image vidéo de l'organe simulé en temps réel ou sensiblement en temps réel.

L'idée générale de l'invention repose en fait sur la simulation de l'image de l'organe du patient par une image de synthèse informatique.

Le respect des conditions habituelles d'observation est par ailleurs garanti grâce à la conservation du binoculaire et de son système de palonnier qui restent identiques à ceux de l'art antérieur.

L'émission d'un rayonnement laser et son pupitre de commande, la lampe à fente et ses moyens de réglage, le grossissement du bio-microscope, et le verre d'examen sont par contre entièrement simulés.

L'organe du patient est quant-à-lui remplacé par un ou deux écrans vidéo rendus solidaires du bio-microscope.

Un seul écran permettra de fournir une même image aux deux objectifs du binoculaire, alors que deux écrans permettent de fournir une image par objectif.

Pour réaliser ces simulations selon l'invention, les paramètres conditionnant l'image visualisée ont été déterminés et sélectionnés.

Il s'agit des paramètres relatifs :

- au déplacement du binoculaire par rapport à la table, et donc à l'organe du patient. Ces déplacements consistent en trois mouvements de translation dans des directions respectivement orthogonales entre elles, à savoir droite-gauche, haut-bas, et avant-arrière, cette dernière translation affectant la mise au point de l'image ;
- au fonctionnement de l'émetteur de rayonnement laser, rayonnement dont il faut pouvoir modifier la taille du point d'impact (spot en terminologie anglo-saxonne), l'intensité et la durée, et pour lequel il faut pouvoir contrôler le déclenchement du tir. La position du point d'impact sur l'organe est quant-à-elle gouvernée par un micro-manipulateur agissant sur un miroir de déflexion simulé mobile autour de deux axes perpendiculaires ;
- aux réglages de la lampe à fente, qui portent sur la hauteur et la largeur de la fente ainsi que sur la puissance de la lampe ;
- au grossissement du bio-microscope, dont la valeur modifie le champ exploré ;
- aux mouvements du verre d'examen, mouvements qui sont décrits par trois rotations permettant l'investigation de différentes régions de l'organe.

Le dispositif selon l'invention est donc agencé pour que le changement de l'un quelconque de ces paramètres modifie l'image en temps réel.

Un ensemble de capteurs leur sont par ailleurs associés pour coder les informations qui les décrivent et pour transmettre ces informations au calculateur qui assure la génération de l'image de synthèse projetée sur le ou les écrans miniaturisés solidaires du bio-microscope.

Concernant la simulation du verre d'examen, rappelons qu'il existe plusieurs types de verres d'examen.

Les plus utilisés sont le verre à trois miroirs et les verres pantoscopiques. Chacun de ces types de verre est caractérisé par sa constitution optique, notamment le nombre et l'inclinaison de ses miroirs. Avec l'invention, l'utilisation d'un modèle mathématique approprié va permettre d'adapter le logiciel de simulation au choix du verre adopté.

Dans le mode de réalisation plus particulièrement décrit ici, appliqué à l'oeil, le verre est posé sur la cornée. Ses mouvements sont décrits par trois rotations, l'une autour de son axe de révolution, les deux autres autour du centre de la cornée respectivement selon un plan horizontal et un plan vertical.

L'un des buts du dispositif de simulation selon l'invention étant par ailleurs l'apprentissage de l'identification des pathologies de l'organe, la simulation de l'image de l'organe du patient est obtenue à l'aide de photographies numérisées, ce qui permet un affichage de textures d'organe très réaliste.

Un logiciel, d'accompagnement pédagogique, permet de plus et par exemple de faciliter l'utilisation du dispositif dans des situations diverses, décrites dans des bases de données d'images et de renseignements cliniques. Des moyens d'enregistrement du déroulement de la session d'apprentissage, qui permettent de la réétudier en différé, sont également avantageusement prévus.

Enfin, l'évaluation, toujours validée par un expert, permet de proposer à un élève opérateur des situations de complexité adaptée à son niveau.

Dans des modes de réalisation avantageux on a donc de plus aussi recours à l'une et/ou à l'autre des dispositions suivantes :

- le dispositif comporte de plus des moyens de simulation d'un rayonnement laser, comportant un élément de commande mobile actionnable par l'opérateur, et des moyens de simulation de l'impact dudit rayonnement laser sur l'organe lorsque l'opérateur agit sur ledit élément de commande mobile ;
- les moyens de simulation du rayonnement laser comportent des moyens permettant de simuler la taille du point d'impact, l'intensité et la durée dudit rayonnement, l'élément de commande mobile comportant des moyens de réglage de la position du point d'impact sur l'image vidéo de l'organe simulé, lesdits moyens de réglage comprenant un micro-manipulateur agencé pour agir sur un miroir de déflexion simulé, mobile autour de deux axes perpendiculaires ;
- les moyens de simulation de la lampe à fente comprennent des moyens de simulation de la hauteur et de la largeur de la fente, et des moyens de simulation de la puissance de la lampe ;
- les moyens de simulation comportent un ensemble de capteurs potentiomètriques agencés pour coder les informations décrivant lesdits paramètres et pour les transmettre auxdits moyens de calcul ;
- le dispositif comporte un capteur unique constitué par un système potentiométrique à deux axes, agencé pour repérer entièrement dans un repère de référence dit repère absolu, la position angulaire absolue desdits moyens d'actionnement manuel agencés pour simuler le déplacement relatif du verre d'examen par rapport à l'image vidéo de l'organe ;
- le dispositif comporte de plus des moyens d'enregistrement du déroulement de l'intervention simulée sur l'organe ;
- l'organe examiné étant un fond d'oeil, le verre d'examen simulé est un verre à trois miroirs dont les mouvements sont décrits par trois rotations, l'une autour de son axe de révolution et les deux autres autour du centre de la cornée de l'oeil dont le fond est simulé, respectivement dans un plan horizontal et dans un plan vertical, la lentille sphérique étant modélisée par un cercle dans un plan et les trois miroirs par trois plans ;

EP 0 758 477 B1

- les moyens de calcul propres à générer une image vidéo du fond d'oeil simulé à examiner sont agencés pour générer une telle image à partir d'au moins une photographie numérisée, le modèle d'oeil utilisé étant une sphère découpée en facettes dont l'iris est modélisé par un anneau plat ;
- les moyens de calcul propres à générer une image vidéo de l'oeil sont agencés pour reconstituer une image complète de l'oeil à partir de plusieurs photographies numérisées, en juxtaposant lesdites photographies bord à bord tout en cherchant à respecter la continuité des vaisseaux sanguins.

L'invention propose également un procédé de simulation d'une intervention sur un organe par un opérateur, ledit opérateur utilisant un binoculaire d'observation de l'organe muni d'un système de palonnier actionnable manuellement et agencé pour déplacer le binoculaire dans un repère trirectangle Ox, Oy, Oz, caractérisé en ce que

on simule par le calcul la présence d'une lampe à fente et le dimensionnement de ladite lampe à fente,
on simule par le calcul une optique de grossissement,
on génère par le calcul une image vidéo de l'organe simulé à examiner et on projette ladite image sur un écran vidéo miniaturisé solidaire du binoculaire,
on simule par le calcul un verre d'examen de fond d'oeil et on simule le déplacement relatif dudit verre d'examen simulé par rapport à ladite image vidéo, par actionnement d'une commande manuelle par l'opérateur,
lesdites simulations étant agencées pour que le changement de l'un quelconque des paramètres relatifs au déplacement du binoculaire, au réglage de la lampe à fente, au grossissement et au verre d'examen, modifie l'image vidéo de l'organe simulé en temps réel ou sensiblement en temps réel.

Dans des modes de réalisation avantageux de procédé on a de plus recours à l'une et/ou à l'autre des dispositions suivantes :

- on simule de plus par le calcul un rayonnement laser, dont le fonctionnement et le déplacement simulés sont actionnés par l'opérateur agissant sur un élément de commande mobile,
  et on simule par le calcul l'impact dudit rayonnement laser sur l'organe lorsque l'opérateur agit sur ledit élément de commande mobile ;
- lors de la simulation du rayonnement laser, on simule par le calcul la taille du point d'impact dudit rayonnement, son intensité et sa durée, et on règle la position du point d'impact sur l'image vidéo de l'organe simulé par actionnement sur un micro-manipulateur agencé pour agir sur un miroir de déflexion simulé mobile autour de deux axes perpendiculaires ;
- on intègre les impacts du rayonnement laser dans l'image vidéo simulée, sans tracer ladite image sur l'écran en cours de tir, et on simule l'éblouissement observé après un tir laser en faisant réapparaître progressivement les couleurs de l'organe de ladite image vidéo simulée ;
- lors de la simulation de la lampe à fente, on simule la hauteur et la largeur de la fente, et la puissance de la lampe ;
- on code les informations décrivant lesdits paramètres par l'intermédiaire d'un ensemble de capteurs et on les transmet aux moyens de calcul générant l'image vidéo de l'oeil simulé propres à projeter ladite image simulée sur lesdits écrans miniaturisés solidaires du binoculaire en modifiant ladite image en temps réel, en fonction desdits paramètres ;
- pour générer l'image vidéo de l'organe simulé, on constitue un fichier de données image appelé "carte", à partir d'images photographiques numérisées, en identifiant pour chaque point desdites images photographiques quatre degrés de liberté, à savoir la longitude ($\varphi$), la latitude ($\theta$), la rotation image ($\nu$) et l'éloignement ($\chi$),

  pour chaque point d'image on calcule une fonction $f(\varphi,\theta,\nu,\chi)$ permettant d'obtenir un point dans la carte de l'organe à visualiser,
  on illumine ce point à l'écran d'un ordinateur utilisé avec sa couleur préalablement définie,
  on vérifie visuellement sur l'écran la cohérence de raccordement entre lesdites images photographiques adjacentes à visualiser,

  tant que le résultat n'est pas satisfaisant, on change les valeurs de $\varphi$, $\theta$, $\nu$, et $\chi$ et on réitère les calculs et l'affichage jusqu'à ce que le résultat soit satisfaisant, auquel cas on réalise alors l'assemblage de l'image ;
- on génère un flou de l'image vidéo en calculant plusieurs textures d'image et en traçant la couleur d'un pixel d'image à partir d'une interpolation linéaire entre deux textures consécutives ;
- pour tracer une partie de l'organe simulé dans une autre partie appartenant audit organe, on utilise un découpage en polygones mettant en oeuvre l'algorithme de Sutherland-Hodgman ;
- on repère entièrement la position angulaire de la commande manuelle actionnée pour simuler le déplacement relatif du verre d'examen simulé par un seul capteur;

- on enregistre le déroulement de l'intervention simulée sur l'organe ;
- l'organe étant un fond d'oeil, pour simuler le verre d'examen, on simule un verre à trois miroirs, dont les mouvements sont décrits par trois rotations, l'une autour de son axe de révolution et les deux autres autour du centre de la cornée du fond d'oeil simulé, respectivement dans un. plan horizontal et dans un plan vertical, en modélisant la lentille sphérique par un cercle dans un plan et les trois miroirs par trois plans ;
- on génère une image vidéo de l'oeil simulé à examiner à partir d'au moins une photographie numérisée, le modèle d'oeil utilisé étant une sphère découpée en facettes dont l'iris est modélisé par un anneau plat ;
- on génère ladite image vidéo de l'oeil en reconstituant une image complète de l'oeil à partir de plusieurs photographies numérisées, et en juxtaposant lesdites photographies bord à bord tout en cherchant à respecter la continuité des vaisseaux sanguins.

L'invention sera mieux comprise à la lecture de la description qui suit des modes de réalisation donnés à titre d'exemple non limitatif, dans le domaine de l'ophtalmologie.

La description se réfère aux dessins qui l'accompagnent dans lesquels :

La figure 1 est une vue schématique, en perspective, d'un dispositif selon un mode de réalisation de l'invention.

Les figures 2 et 3 sont des vue schématiques d'un verre à trois miroirs respectivement en vue de face et de profil et modélisé selon un mode de réalisation de l'invention.

La figure 4 illustre les possibilités de déplacement du verre d'examen simulé lorsque l'un des paramètres (x ou y) est conservé constant.

La figure 5 est une vue latérale schématique représentant un modèle d'oeil humain utilisé dans la simulation selon le mode de réalisation de l'invention plus particulièrement décrit ici.

Les figures 6 et 7 illustrent la reconstruction d'un fond d'oeil à partir de photos permettant la constitution de la base de données de fonds d'oeil simulés.

La figure 8 est un organigramme donnant les étapes de recollage d'image pour obtenir un fond d'oeil.

Les figures 9A et 9B montrent schématiquement les deux étapes permettant d'obtenir le modèle approché de l'oeil selon un mode de réalisation de l'invention.

La figure 10 illustre le principe du balayage par fenêtre utilisé dans le mode de réalisation de l'invention plus particulièrement décrit ici.

Les figures 11 et 12 illustrent le principe dit de facettisation également utilisé dans un mode de réalisation de l'invention.

La figure 13 est un schéma de modélisation de la scène représentant les positions respectives de l'opérateur, de l'oeil du patient et de la lampe à fente.

Les figures 14 et 15 donnent respectivement une vue des éléments de fond d'oeil à tracer et une vue dans un des miroirs obtenus avec les algorithmes de visualisation selon un mode de réalisation de l'invention.

La figure 16 illustre le principe de l'algorithme de Sutherland-Hodgman également utilisé avantageusement selon l'invention.

La figure 17 donne l'organigramme de l'algorithme principal utilisé pour le traçage de l'image selon le mode de réalisation de l'invention plus particulièrement décrit ici.

Les figures 18 à 23 donnent les arbres programmatiques illustrant le précalcul et le tracé de fond d'oeil, selon un mode de réalisation préféré du procédé de l'invention.

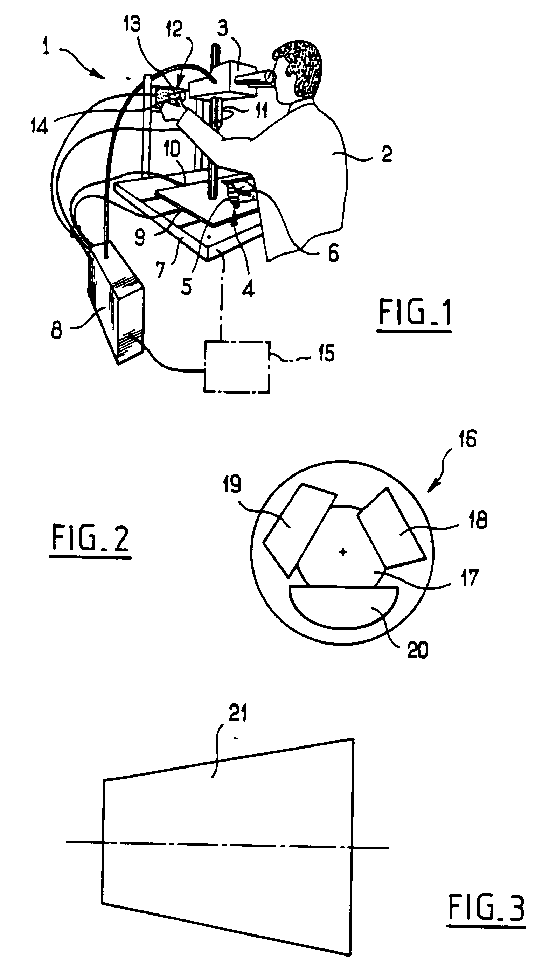

La figure 1 montre un dispositif 1 de simulation d'une intervention sur un fond d'oeil par un opérateur 2. Le dispositif 1 comporte un binoculaire 3 d'observation connu en lui-même, muni d'un système 4 de palonnier actionnable manuellement en 5 par l'opérateur via une manette 6, de façon connue en soi. Le système 4 permet le déplacement du binoculaire dans un repère trirectangle Ox,Oy,Oz dont le plan Ox,Oy est parallèle ou confondu avec la table 7 de support du binoculaire.

Le dispositif 1 comprend un calculateur 8 par exemple constitué par un micro-ordinateur du type PC muni d'un microprocesseur INTEL 486 et de moyens de mémoire suffisant pour stocker les images de synthèse obtenues par scanérisation de photographies de fond d'oeil, par exemple de 16 Mégaoctets de mémoire centrale et 500 Mégaoctets de mémoire de masse, par exemple du type disque dur.

Le micro-ordinateur comporte une carte d'interface entrée/sortie connectée d'une part à trois capteurs linéaires potentiométriques 9, 10 et 11, par exemple du type fabriqué par la société française MEIRI et vendu sous la référence REC342XD103, de détection des déplacements, et de positionnement, du binoculaire 3 par rapport à la table 7 dans le repère Ox,Oy,Oz, et d'autre part à un micro-manipulateur 12 comprenant un petit manche à balai 13 dont les mouvements en rotation en x,y,z sont mesurés par un système potentiométrique à trois axes connu sous la dénomination joystick en language anglo-saxon, par exemple du type fabriqué par la société LEXTRONIC et vendu sous la référence 124-C, qui permet de simuler en direct, par actionnement manuel en 14 de l'opérateur, les mouvements relatifs du verre d'examen simulé par rapport au fond d'oeil simulé, et cela en effectuant des mouvements de la main, comme s'il s'agissait d'explorer un fond d'oeil en réel.

Les commandes de la lampe à fente et celles du laser sont quant-à-elles traduites par des commutateurs à positions multiples et des potentiomètres reliés au calculateur 8 et schématiquement représentés en 15 (en trait mixte sur la figure 1).

Un contacteur à pédale (non représenté) permet, s'il y a lieu, le déclenchement par l'opérateur 2 du tir d'un rayonnement laser entièrement simulé et dont le boîtier de contrôle (également non représenté) est intégralement reproduit.

Toutes les grandeurs d'entrée-sortie sont par exemple échantillonnées au format 12 bits.

Comme on l'a vu, le verre d'examen selon l'invention est par ailleurs entièrement simulé par le calcul.

Afin de pouvoir simuler tous les types de verre, les inventeurs ont choisi de simuler un verre à trois miroirs, qui permet de réaliser une synthèse des caractéristiques des autres verres.

Il autorise en effet à la fois l'observation directe et indirecte du fond de l'oeil. Le simulateur peut ainsi s'adapter à d'autres types de verre, sans avoir à modifier ou compléter le programme de calcul permettant de substituer une vue directe à une vue indirecte, ou inversement.

On a représenté sur la figure 2 un verre 16 à trois miroirs, de type connu, constitué d'une lentille sphérique centrale 17 et de trois miroirs plans de différentes inclinaisons, à savoir un miroir 18 incliné à 73° par rapport au plan frontal, qui permet l'observation des régions situées autour du fond de l'oeil, un miroir 19, incliné à 66°, qui permet l'observation des régions périphériques de l'oeil et un miroir 20, incliné à 59°, qui permet l'observation des régions de l'oeil situées autour de l'iris.

Le verre 16 possède donc trois degrés de liberté, à savoir un degré de liberté autour de son axe de révolution, et deux degrés de liberté autour du centre de l'oeil ou plus précisément, du centre de la cornée. Les inventeurs ont montré que les angles de battement des miroirs 18, 19 et 20 autour de l'oeil sont inférieurs à 27°, le verre 16 pouvant par contre tourner de 360° autour de son axe.

Selon le mode de réalisation de l'invention plus particulièrement décrit ici, on modélise mathématiquement le verre à trois miroirs par un cône 21 (cf. figure 3), en faisant une approximation de la lentille sphérique par un cercle dans un plan et on modélise les trois miroirs par trois plans.

Chaque miroir 18, 19 et 20 se caractérise donc par quatre points définissant les bords, et une équation de plan. La cornée est modélisée par une demi-sphère par exemple de rayon 7,7mm, dont le centre est décalé par rapport à celui de la sphère de l'oeil, les axes des repères correspondants restant toujours les mêmes.

Dans la base de données du calculateur 8, les coordonnées sont donc exprimées dans un repère centré sur le centre de la sphère de la cornée de coordonnées xo, yo, zo.

On se fixe par ailleurs une position initiale du verre d'examen pour décrire les diverses coordonnées.

Le verre d'examen subit les mêmes translations que l'oeil, mais se déplace autour de lui, au moyen de trois rotations, une autour de son axe, et deux autour de l'oeil.

On va maintenant décrire ci-après ces rotations.

Dans le mode de réalisation plus particulièrement décrit ici, le capteur choisi pour modéliser le verre à trois miroirs est un élément connu sous la dénomination anglo-saxonne "joystick" à trois rotations, car il permet un repérage absolu de la position du manche à balai 14.

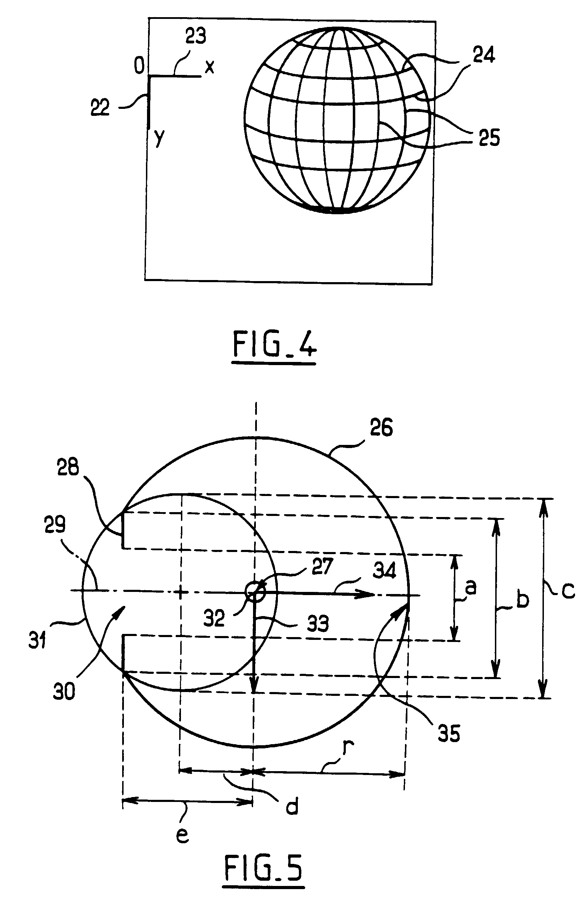

Le problème résolu par cette partie de l'invention consiste en fait à trouver, en fonction des renseignements communiqués par le joystick, quelle est la position du manche. Les informations sont transcrites en coordonnées polaires après étalonnage préalable du joystick, les deux rotations fonctionnant sur le principe des coordonnées sphériques (voir figure 4), en prévoyant d'abord une rotation autour de l'axe Oy 22, puis une rotation autour du nouvel axe Ox 23, qui a tourné du fait de la rotation autour de Oy.

La figure 4 illustre respectivement par des lignes de parallèles 24, ou par des lignes de longitudes 25, le déplacement du joystick lorsque l'un des paramètres (x ou y) est constant.

Ces rotations se traduisent sous forme d'une matrice de transformation de l'espace, le calcul de cette matrice étant donc nécessaire pour connaître la nouvelle position des points des miroirs et du verre central, après les rotations.

La matrice de rotation selon l'axe de révolution est donnée ci-après.

$$M_\theta = \begin{pmatrix} \cos\theta & -\sin\theta & 0 & 0 \\ \sin\theta & \cos\theta & 0 & 0 \\ 0 & 0 & 1 & 0 \\ 0 & 0 & 0 & 1 \end{pmatrix}$$

La première rotation à effectuer est ensuite celle d'axe Ox et d'angle $\varphi$, ce qui revient à se placer à la bonne latitude. Ensuite on compose avec la rotation d'axe Oy et d'angle $\psi$ en se plaçant donc cette fois-ci sur la bonne longitude.

La matrice de rotation est donnée ci-après :

$$M_{\varphi\psi} = \begin{pmatrix} \cos\psi & \sin\varphi\sin\psi & \cos\varphi\sin\psi & 0 \\ 0 & \cos\varphi & -\sin\varphi & 0 \\ -\sin\psi & \sin\varphi\cos\psi & \cos\varphi\cos\psi & 0 \\ 0 & 0 & 0 & 1 \end{pmatrix}$$

La matrice globale de changement de coordonnées, après toutes les rotations et la translation, est donc donnée par la formule :

$$Mat = \begin{pmatrix} 1 & 0 & 0 & x_0 \\ 0 & 1 & 0 & y_0 \\ 0 & 0 & 1 & z_0 \\ 0 & 0 & 0 & 1 \end{pmatrix} \times M_{\varphi\psi} \times M_\theta$$

Il suffit ensuite de multiplier cette matrice par les coordonnées (x;y;z;1) d'un point M (de l'image simulée), dans le repère lié au verre à trois miroirs, pour obtenir les coordonnées (x';y';z';1) du point M dans le repère absolu :

$$\begin{pmatrix} x' \\ y' \\ z' \\ 1 \end{pmatrix} = Mat \times \begin{pmatrix} x \\ y \\ z \\ 1 \end{pmatrix}.$$

Avantageusement cette matrice sert également pour déterminer la nouvelle équation des plans des miroirs. En effet, d'une manière générale, si Mat est la matrice de changement de coordonnées, et si le plan est ax + by + cz + d = 0, dans le repère du verre, alors la nouvelle équation du plan, dans le repère absolu est donnée par la formule a'x + b'y + c'z + d' = 0, avec :

$$\begin{pmatrix} a' \\ b' \\ c' \\ d' \end{pmatrix} = {}^t Mat^{-1} \times \begin{pmatrix} a \\ b \\ c \\ d \end{pmatrix}.$$

En remarquant par ailleurs que les matrices $M_{\varphi\psi}$ et $M_\theta$ sont des matrices orthonormées (comme composées de rotation), il vient ${}^t M_{\varphi\psi} = M_{\varphi\psi}$ et ${}^t M_\theta = M_\theta$ .
On en déduit donc que :

$$^t Mat^{-1} = \begin{pmatrix} 1 & 0 & 0 & 0 \\ 0 & 1 & 0 & 0 \\ 0 & 0 & 1 & 0 \\ -xo & -yo & -zo & 1 \end{pmatrix} \times M_{\varphi\psi} \times M_\theta$$

L'équation du plan dans le nouveau repère permet de trouver les images des points dans le miroir, c'est à dire le symétrique des points par rapport au plan. Si ax+by+cz+d=0 est la nouvelle équation, normée, du plan du miroir, on obtient alors l'image M' de M par :

$$\begin{cases} x_{M'} = x_M - 2 * dist * a \\ y_{M'} = y'_M - 2 * dist * b \\ z_{M'} = z_M - 2 * dist * c \end{cases} \text{ où } dist = ax + by + cz + d$$

On va maintenant décrire les principes généraux de modélisation de l'oeil mis en oeuvre dans le mode de réalisation de l'invention plus particulièrement décrit ici, en référence à la figure 5.

L'oeil est modélisé par une sphère de centre 27, l'iris étant modélisé par un anneau plat 28, orthogonal à l'axe optique 29, définissant la pupille 30. La cornée est quant-à-elle définie par une deuxième sphère 31, par exemple de diamètre 10,8mm, de centre excentré par rapport à celui de la sphère.

A titre d'exemple non limitatif, les dimensions d'un modèle retenu sont données ci-après en référence à la figure 5 :

| a = 9 mm | d = 5,4 mm |
|---|---|
| b = 12 mm | r = 12 mm |
| c = 15,4 mm | e = 10,39 mm |

Tous les points de l'oeil sont ainsi définis dans un repère lié à l'oeil, le centre de ce repère étant le centre 27 de la sphère. Les axes sont par ailleurs définis de la façon suivante.

Si on regarde l'oeil, avec l'iris devant soi, l'axe Ox 32 est horizontal et pointe vers la droite, l'axe Oy 33 est dirigé vers le bas et l'axe Oz 34 se dirige de la pupille 30 vers la macula 35, dans la direction de l'axe optique.

On va maintenant décrire le processus de création de la texture de fond d'oeil utilisé dans l'invention.

La première application envisagée étant la photo-coagulation par laser, on a choisi d'utiliser des photos digitalisées de fond d'oeil.

Un travail de reconstruction de fond d'oeil complet à partir de plusieurs photos digitalisées est donc tout d'abord effectué.

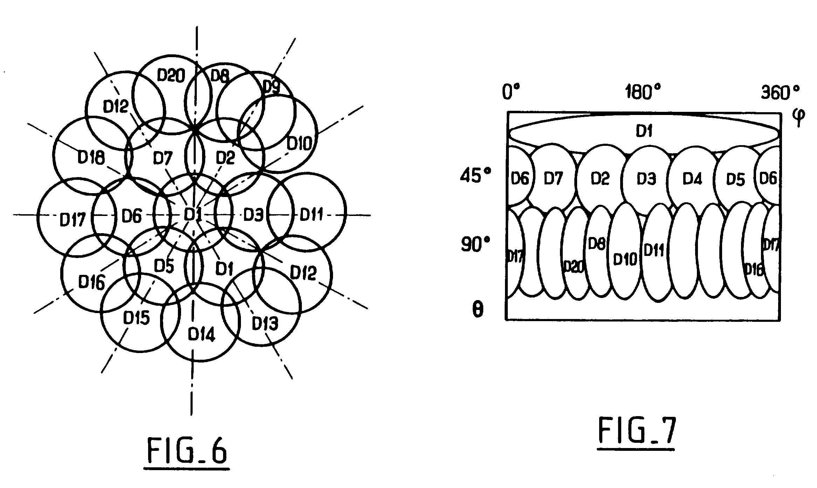

Il est décrit ci-après en référence aux figures 6 et 7, la figure 6 donnant la position des photos lors de la prise de vue et la figure 7 après projection sur la carte.

Le problème posé et résolu par l'invention est en l'espèce d'obtenir une base de données de l'oeil humain sous forme de carte en coordonnées polaires $M_{\varphi\psi}$ et $M_\theta$ (voir figure 7).

Celle-ci est réalisée à partir d'un ensemble de vingt photographies par oeil (D1 à D20 sur les figures 6 et 7).

La solution mathématique retenue par les inventeurs fait ici appel au calcul matriciel sur des matrices de rotation et à des projections rectangulaires toujours effectuées selon le même axe.

Pour obtenir un bon alignement des images, quatre degrés de liberté sont retenus : la longitude ($\varphi$), la latitude ($\theta$), la rotation image ($\nu$) et l'éloignement ($\chi$).

Pour remplir la carte de fond d'oeil sans trous, il est donc réalisé :

. Un balayage de tous les points de la carte dans une fenêtre centrée autour du point M ($\varphi,\theta$) qui est le point de tangence entre le plan image et la sphère de l'oeil.

. Un calcul dans le plan image des coordonnées du point correspondant, ce qui revient donc à effectuer une projection de la sphère vers le plan.

. Une copie de la valeur de l'intensité lumineuse des composantes Rouge, Vert, Bleu (RVB) associées audit point.

Comme on fonctionne en temps réel ou sensiblement en temps réel, il est nécessaire d'obtenir un affichage rapide.

Pour cela on ne garde à l'affichage que les points du plan image en effectuant une projection du plan vers la sphère.

Le logiciel mis en oeuvre pour réaliser ce qui vient d'être décrit est par ailleurs conçu interactif, de manière à permettre le déplacement de l'image pour l'ajuster, avant de procéder au collage dans la carte de fond d'oeil.

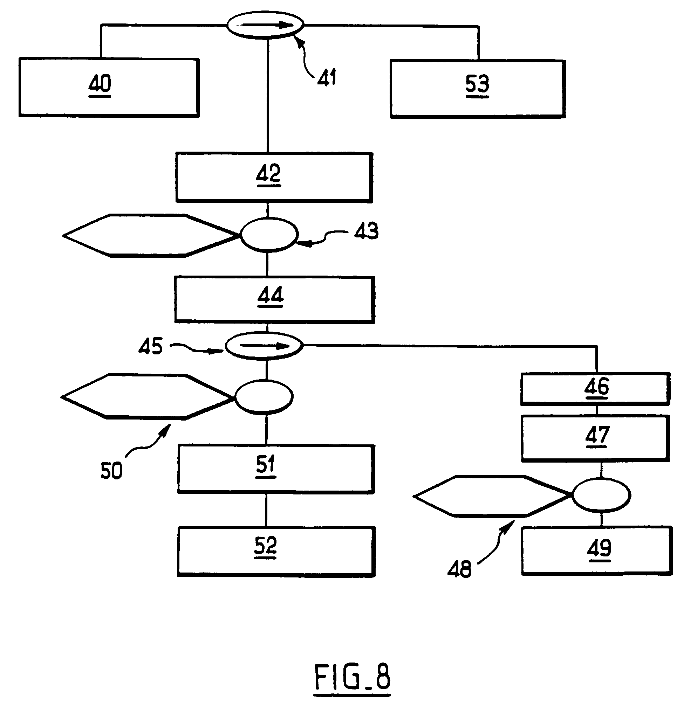

L'organigramme du programme permettant le recollage des images entre elles est maintenant décrit ci-après en référence à la figure 8.

La première étape 40 est une étape d'initialisation graphique, d'initialisation des paramètres et d'ouverture de la carte de fond d'oeil.

En cours de fonctionnement (étape 41), il y a successivement affichage de la carte (étape 42), puis pendant qu'il y a image (étape 43), saisie du nom et lecture du fichier image (étape 44), étape elle-même suivie, en cours de fonctionnement (étape 45), si l'opérateur est satisfait, de l'étape 46 de calcul de la fenêtre définie ci-avant, puis de l'étape 47 réalisant la fonction "coller", et si il y a accord en 48 de l'opérateur, enregistrement en 49 de la carte de fond d'oeil.

Si l'opérateur n'est pas satisfait (étape 50), il y a alors saisie des paramètres $\varphi$, $\theta$, $\nu$ et $\chi$ en 51 avant d'effectuer l'étape 52 réalisant la fonction "Projeter".

Le programme de formation de fond d'oeil une fois terminé, l'étape 53 de fermeture graphique et de libération de la mémoire est alors réalisée.

Les fonctions "Projeter" et "Coller" sont décrites ci-après en pseudo-code.

```
Projeter :      Pour tout point image
                Echantillonnage f(χ) ;
                Rotation Plan f(ν);
                Projection Plan Sphère;
                Rotation Sphère f(φ,θ) ;
                Transformation cartésienne sphérique;
                Affichage dans la carte de la valeur point image;
                Finpour


Coller :        Pour tout point de carte situé dans la fenêtre
                Transformation sphérique cartésienne;
                Rotation Sphère inverse f'(φ,θ);
                Projection Sphère Plan;
                Rotation inverse f'(ν) ;
                Echantillonnage inverse f'(χ) ;
                Lecture valeur point image;
                Finpour
```

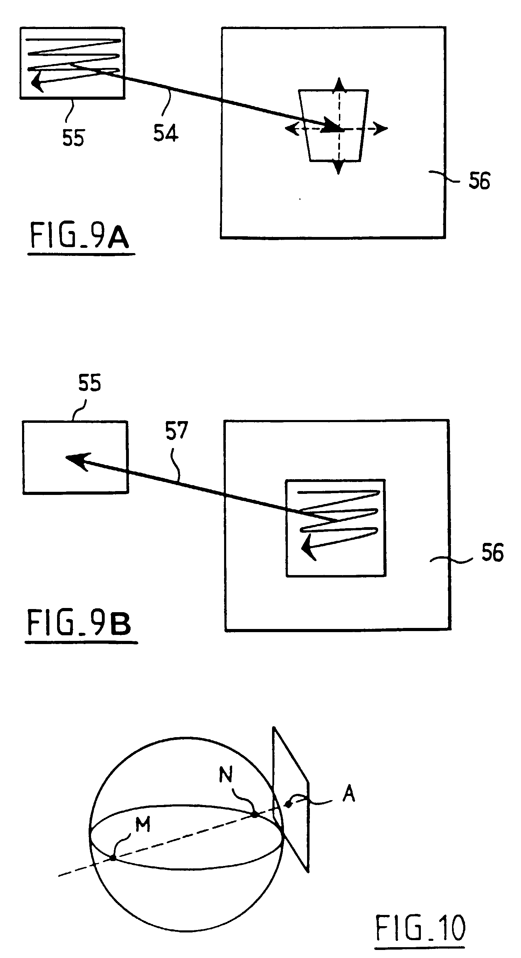

Le programme proprement dit de création de la texture de fond d'oeil est à nouveau décrit plus précisément ci-après en référence aux figures 8, 9, 9' et 10.

La taille de la base de données utilisée est tout d'abord et par exemple fixée à 1024 sur 1024 pixels, de façon à obtenir un bon compromis entre la qualité de l'image produite, l'encombrement mémoire et le temps de traitement.

Le montage est par ailleurs réalisé en vraies couleurs, la réduction en fausses couleurs étant faite après le montage.

Le format de l'image est un format dit bitmap, par exemple le format connu sous la dénomination Targa, dont l'extension MS-DOS est désignée par l'abréviation TGA.

La solution employée dans le mode de réalisation de l'invention plus particulièrement décrit ici pour la numérisation est le transfert des photos sur Photo CD Kodak™. Les images numériques fournies sont ainsi d'excellente qualité pour un coût de numérisation faible. La même image est reproduite dans cinq formats différents sur le disque de stockage CD-Rom, à savoir 3076 x 2048 pixels, 1536 x 1024 pixels, 768 x 512 pixels (format employé pour le montage final), 384 x 256 pixels et enfin 192 x 128 pixels.

Le programme se déroule en deux phases distinctes.

La première phase (voir figure 9A) sert à estimer les paramètres $\varphi$, $\theta$, $\nu$ et $\chi$. Elle est par exemple supervisée par l'opérateur, mais peut être également automatique.

Le programme calcule les changements de coordonnées dans le sens 54 de l'image 55 vers la carte 56 comme indiqué sur la figure 9A.

L'opérateur initialise les paramètres paramètres $\varphi$, $\theta$, $\upsilon$ et $\chi$. Pour $\varphi$ et $\theta$, les valeurs sont à peu près connues si le photographe a noté des repères lors de la prise de vue. Pour la première couronne, $\theta$ vaut de l'ordre de 40° et pour la deuxième de l'ordre de 80°.

L'angle $\varphi$ étant en général noté en heures, on réalise simplement la conversion une heure = 30°.

Pour l'angle $\upsilon$, toutes les valeurs de 0° à 360° sont a priori possibles, la méthode alors utilisée étant l'essai d'une valeur au hasard et la visualisation d'un premier résultat, puis la recherche de la bonne valeur par tâtonnements successifs.

Enfin pour l'angle $\chi$, la valeur d'environ 40° a été déterminée en mesurant le diamètre du nerf optique. Sachant qu'un nerf optique mesure à peu près 1,5 mm de diamètre, on compte le nombre de pixels pour calculer la distance entre 2 pixels éloignés et trouver ainsi la valeur moyenne de l'échantillonnage à appliquer.

Pour chaque point de l'image, le programme calcule alors f($\varphi$, $\theta$, $\upsilon$, $\chi$.) pour obtenir un point dans la carte, puis illumine ce point à l'écran de l'ordinateur utilisé avec la couleur du point image (étape 42).

L'opérateur vérifie ensuite visuellement sur l'écran le raccordement entre photographies (étape 45).

Tant que l'opérateur est mécontent du résultat (étapes 50 à 52), il change les valeurs de $\varphi$, $\theta$, $\upsilon$ et $\chi$ et les calculs

et l'affichage sont réitérés (confère description ci-dessus).

Dès que l'opérateur est satisfait, il déclenche la deuxième phase (étapes 46 à 49) (voir également figure 9B).

La deuxième phase réalise l'assemblage. Elle fonctionne de manière automatique.

Le programme calcule les changements de coordonnées dans le sens 57 allant de la carte 56 vers l'image 55, comme indiqué sur la figure 9B.

Le programme détermine alors une fenêtre (étape 47) autour du point de la carte de fond d'oeil de coordonnées $\varphi$, $\theta$ estimés précédemment.

Pour tous les points de cette fenêtre, le programme calcule $f(\varphi, \theta, \upsilon, \chi.)$ pour obtenir un point dans l'image.

Le programme recopie alors dans ce point de la carte de fond d'oeil, la couleur du point Image le plus proche.

A noter que quand on lit tous les points de la carte, deux points situés sur le même parallèle auront la même projection sur le plan, mais un seul est le résultat de la projection du plan sur la sphère. C'est le point le plus proche du point de tangence qui est à prendre en considération, comme illustré sur la figure 10, où les points M et N se projettent bien tous deux en A, mais où seul le point N est à retenir.

Par ailleurs, seule une fenêtre autour du point de tangence est balayée (et non la sphère entière). Cette fenêtre est de taille variable en fonction de la valeur de l'angle $\theta$. En effet il est clair qu'il faille balayer tous les angles $\varphi$ lorsqu'on est à proximité du pôle. Par contre dès qu'on s'éloigne du pôle, la fenêtre à balayer en angles $\varphi$ peut être réduite.

On va maintenant décrire la méthode utilisée pour réaliser le plaquage de textures sur le fond d'oeil, c'est-à-dire la mise en place des morceaux d'image juxtaposée sur un fond sensiblement sphérique.

Pour ce faire, on décide de présenter la surface de la sphère sous forme de facettes ou de "facettiser" la sphère, et ensuite de donner une texture à chaque facette, ou de texturer chaque facette.

La facettisation peut être plus ou moins fine. Plus elle est fine, plus il y a de facettes à traiter, mais la méthode d'affichage reste identique. Seul le temps de traitement est alors plus long, sans que le temps d'affichage ne soit, lui, en rien modifié. La méthode ne dépend donc pas du nombre de facettes utilisées.

Une condition essentielle de la facettisation est que l'objet-facette englobe la sphère. En effet, comme on regarde l'intérieur de la sphère, s'il existe des volumes à l'extérieur de l'objet-facette, des zones de l'écran ne seront pas texturées pour des angles de visée "rasant".

Le cas particulier de facettisation en icosaèdre est détaillé ci-après. Rappelons que l'icosaèdre est composé de 20 triangles équilatéraux.

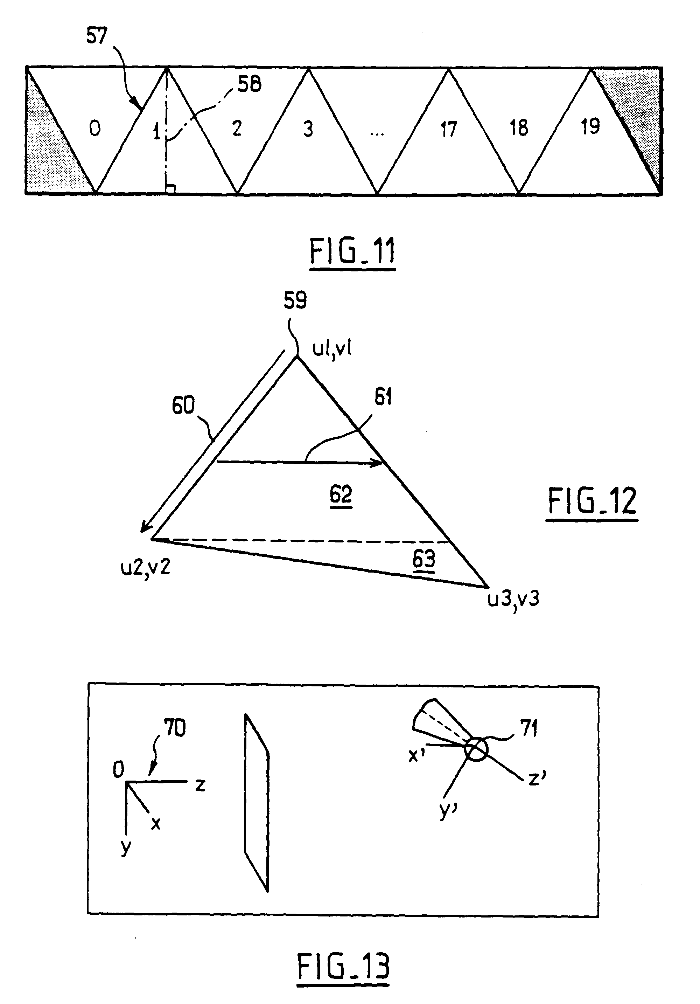

La texture est alors codée de la manière suivante. On fixe tout d'abord un numéro pour chaque facette. Les textures sont alors codées dans des triangles mis bout à bout dans l'ordre croissant. La structure obtenue peut donc être insérée dans un tableau bi-dimensionnel (voir figure 11).

Dans le mode de réalisation plus particulièrement décrit ici, on affecte à chaque côté 57 une valeur de 512 octets et à chaque hauteur 58 de triangle une valeur identique de 512 octets. Le tableau est donc de 512x512x20/2 soit 2621440 octets, une couleur étant codée sur un octet. La couleur d'un point de la facette est alors obtenue en projetant ce point vers le centre de la sphère, et en récupérant la couleur du point de la sphère rencontré (projection conique de centre de la sphère).

Pour illustrer la description qui précède, supposons qu'apparaisse à l'écran une zone qu'il faille texturer ; c'est par exemple la zone dans laquelle on voit le fond de l'oeil.

Alors pour chaque facette, on procède comme suit.

On élimine tout d'abord la facette si elle est mal orientée. Sinon on projette cette facette à l'écran, on la superpose avec la zone dans laquelle on voit le fond de l'oeil, et on divise le polygone obtenu en triangles que l'on texture les uns après les autres, par exemple en utilisant la technique de découpage de polygones qui va être décrite plus loin.

Pour la texture, on réalise par exemple une double interpolation linéaire (voir figure 12), c'est-à-dire que pour chaque sommet du triangle 59, on calcule les couples (u, v), puis on interpole u et v suivant un côté du triangle (flèche 60), puis à partir de chaque point dudit côté, on interpole horizontalement (flèche 61).

On quadrille ainsi le triangle, en deux passes, pour donner un triangle supérieur (62) et un triangle inférieur (63).

La méthode de double interpolation a l'avantage d'être rapide. Elle peut en effet être écrite de façon incrémentale, c'est à dire qu'elle n'utilise que des entiers. Pour chaque pixel, seul deux additions et deux tests sont ainsi utilisés.

La méthode de la double interpolation ne tient cependant pas compte de la déformation dûe à l'effet de perspective, ce qui se révèle en fait non gênant, les facettes étant quasiment parallèles au plan de l'écran.

La facettisation de la sphère de l'oeil présente cependant des inconvénients. En effet, la méthode de facettisation garantit une continuité $C_0$ de la texture, mais pas une continuité $C_1$ sur les bords de deux facettes. Cela n'est pas gênant dans le cas général, sauf si un vaisseau sanguin passe d'une facette à une autre. Dans ce cas, on constate une discontinuité de la tangente à l'interface.

Dans le mode de réalisation de l'invention plus particulièrement décrit ici, il est aussi prévu de générer un flou logiciel en temps réel.

Pour ce faire, on décide d'un certain nombre de niveaux de flou, qui sont exactement calculés. Pour le calcul d'un flou, pour chaque pixel, on prend la moyenne des couleurs des points d'une zone carrée située autour du pixel considéré. La taille de la zone définit alors le niveau de flou retenu, plus ou moins grand.

On précalcule donc par exemple trois niveaux de flou, et on créé la texture pour chaque niveau. On obtient ainsi quatre textures du fond d'oeil, la texture nette et trois textures floues.

Lorsque l'on trace le fond de l'oeil, la couleur d'un pixel est obtenue en interpolant linéairement entre deux niveaux consécutifs parmi les quatre versions de la texture.

On va considérer, par exemple, dix stades intermédiaires entre deux niveaux de flou calculés, soit un paramètre a variant de 0 à 0,9 par pas de 0,1. La couleur du pixel est donc obtenue par la formule suivante :

$$C = C_2 * \alpha + C_1 * (1 - \alpha)$$

où $C_1$ est la couleur du pixel dans la texture la moins floue et $C_2$ celle de la texture la plus floue.

Afin de s'affranchir du calcul de C en réel, on précalcule par ailleurs cette formule.

Ainsi, si on travaille en 256 couleurs, on peut, pour chaque valeur de $\alpha$, mettre la valeur de C (ou plutôt son approximation dans la palette de couleur) dans une table dont les entrées sont $C_1$ et $C_2$. La taille de la table obtenue est alors 256x256x10, car il y a dix valeurs pour $\alpha$.

On peut par ailleurs optimiser l'opération. Ainsi, pour un pixel, on obtient une valeur dite longue (32 bits) qui correspond à quatre valeurs de 8 bits chacune, représentant les quatre couleurs du pixel à chaque niveau de flou. Ces valeurs sont rangées dans l'ordre croissant du flou.

On effectue ensuite une opération de décalage puis on applique un masque afin d'obtenir la concaténation binaire $C_1 C_2$. Sachant où commence le tableau pour un a donné, la valeur de C s'obtient alors directement par lecture à l'emplacement mémoire début+$C_1 C_2$.

En vraie couleur, la conversion est encore plus simple, et exacte. Si chaque composante est codée sur n bits, on travaille avec une table du type nxnxl0. Cette table est valable pour toutes les composantes, mais nécessite trois accès mémoire (un par composante), pour reconstituer la couleur.

Une suite de programmes permet par ailleurs de créer la base de données de la texture.

Les données d'entrée sont en l'occurence quatre fichiers bitmap représentant quatre niveaux de flou. Ces fichiers sont en fait des cartes en $(\theta, \varphi)$ de l'oeil, les pôles étant les points de l'axe optique. Ces fichiers sont par exemple au format .BMP (de l'interface connue sous la dénomination Windows 3.x), en 256 couleurs, de taille 1024x1024 et ont la même palette. Ils sont numérotés de 1 à 4.

Un premier programme permet tout d'abord d'obtenir d'une part un fichier palette .PAL, donnant pour les couleurs de 0 à 255, la valeur du triplet RVB en 8 bits chacun. Il génère ensuite quatre fichiers .TEX représentant chaque bitmap, à partir du point en haut à gauche. Ces fichiers n'ont pas d'entête.

Un autre programme génère par ailleurs la texture associée à chaque triangle et crée ainsi quatre fichiers .TXU. Ces fichiers sont les tableaux décrits sur la figure 11.

Ceci peut être résumé de la façon suivante :

$$\left. \begin{array}{l} \text{Nom1.BMP} \\ \text{Nom2.BMP} \\ \text{Nom3.BMP} \\ \text{Nom4.BMP} \end{array} \right\} \Rightarrow \left\{ \begin{array}{l} \text{Nom.PAL} \\ \text{Nom1.TEX} \\ \text{Nom2.TEX} \\ \text{Nom3.TEX} \\ \text{Nom4.TEX} \end{array} \right\} \Rightarrow \left\{ \begin{array}{l} \text{Nom.PAL} \\ \text{Nom1.TXU} \\ \text{Nom2.TXU} \\ \text{Nom3.TXU} \\ \text{Nom4.TXU} \end{array} \right.$$

On va maintenant décrire le logiciel de simulation proprement dit, et tout d'abord la modélisation de l'opération.

La modélisation est très dépendante de l'algorithme de rendu utilisé. Parmi les méthodes couramment utilisées en synthèse d'images, on trouve les méthodes dites de lancer de rayon et de rendu géométrique. Le lancer de rayons exige des temps de calculs prohibitifs si l'on désire faire des animations en temps réel. Le rendu géométrique consiste à découper chaque surface de la scène en triangles, à trier les surfaces ou à employer un algorithme de type connu sous la dénomination Z-buffer. Il exige des machines spécialisées.

Avec l'invention, le procédé utilisé est indépendant de la machine avec laquelle il est mis en oeuvre. Pour ce faire on choisit de modéliser chaque objet de manière simple, et d'afficher avec un ordre invariant, ce qui rend tout tri inutile. Le dispositif de simulation est par exemple implanté sur un PC 486DX2 66 MHz avec carte graphique du type Local Bus, qui se révèle être la configuration minimum actuelle pour faire fonctionner le dispositif de simulation de manière interactive.

Pour réaliser la modélisation de la lampe à fente, et donc la modélisation de la scène (voir figure 13), on convient d'un repère absolu (70) Ox,Oy,Oz, dans lequel toutes les coordonnées sont exprimées. Ce repère est placé fictivement au centre de l'oeil de l'opérateur qui est supposé pour ce faire ne travailler qu'avec un oeil (alors qu'en réalité, il utilise un binoculaire).

L'axe Ox est dirigé vers la droite de l'opérateur, l'axe Oy vers le bas et l'axe Oz de l'opérateur vers le patient.

Dans la réalité, l'oeil du patient reste immobile, et c'est la lampe à fente qui bouge, l'opérateur effectuant les mêmes déplacements. Dans le modèle selon l'invention on réalise le contraire, c'est à dire que c'est l'opérateur et la lampe à fente qui restent immobiles, et c'est l'oeil du patient qui bouge de façon simulée.

On repère tout d'abord le centre 71 de l'oeil au point de coordonnées $(x'o,y'o,z'o)$ dans le repère global défini précédemment (axes 32, 33, 34 de la figure 5).

Les variations de ces paramètres signifient des translations du système.

La lampe à fente se caractérise quant à elle par la lumière qu'elle émet vers le patient. On modélise les changements de puissance d'éclairage en rendant plus claire ou plus foncée la partie ou zone rectangulaire de l'oeil éclairée par la lampe.

En ce qui concerne maintenant la modélisation du laser, rappelons que dans la réalité il existe un miroir à deux degrés de liberté qui permet d'orienter le rayonnement laser par rapport à l'oeil. On appelle $\xi$ et $\zeta$ les angles de rotation respectivement suivant Oy et Ox. La position de repos est atteinte lorsque le miroir est vertical, c'est à dire lorsque sa normale est de coordonnées $(0;0;1)$ dans le repère Ox,Oy,0z. Après les deux rotations, la nouvelle normale vaut N $(\sin\zeta\cos\xi;-\sin\xi;\cos\zeta\cos\xi)$. Le rayon d'incidence est alors modélisé par une droite, de vecteur directeur $I(0,1,0)$. Le rayon réfléchi vaut quant à lui $R = I - 2(N.I)N$.

Le point d'impact du rayonnement laser sur le miroir se situant toujours sur l'axe de rotation Oy, il a pour coordonnées dans un repère lié au miroir (le centre étant l'intersection des deux axes de rotation) :

$$0;-\frac{d}{\sin\xi};0$$

où d est la distance de ce centre au miroir.

Par ce même procédé, on calcule alors l'éventuelle réflexion du rayonnement sur l'un des miroirs du verre à examiner.

Pour les trois miroirs 15, 16, 17, l'intersection M entre le plan et la droite modélisant le laser, est ensuite déterminée. Puis on vérifie si M est à l'intérieur du miroir, via un algorithme mettant en oeuvre des produits vectoriels.

Soit l'ensemble des coins du miroir, avec $M_0 = M_n$, orienté dans le sens trigonométrique, et N la normale au plan. Le miroir étant convexe, on a la propriété suivante :

$$M \text{ est à l'extérieur} \Leftrightarrow \exists i, \left(\overrightarrow{MM_i} \wedge \overrightarrow{MM_{i+1}}\right).\bar{N} < 0$$

Ensuite on calcule l'intersection entre le rayon, direct ou réfléchi, et la sphère de l'oeil.

L'algorithme de visualisation mis en oeuvre dans le mode de réalisation de l'invention plus particulièrement décrit ici va maintenant être décrit.

On dessine tout d'abord à l'écran le verre central, puis la vue qu'a l'observateur au travers du verre. On traite ensuite les miroirs un par un, via une boucle, en dessinant l'image du verre central dans le miroir, et la partie de l'oeil vue dans cette image. En effet, les parties de l'oeil vues dans un miroir, sont observées au travers du verre central.

Les objets à tracer sont donc les suivants :

- Verre central et sa bordure ;
- Iris ;
- Texture de fond d'oeil de la lentille centrale ;
- Point d'impact du rayonnement laser (spot laser) ;
- Miroirs ;
- Vues du verre central ;
- Images de l'iris dans les miroirs ;
- Images du fond d'oeil dans les miroirs ;
- Images du spot laser dans les miroirs ;
- Trace de la réflexion du spot laser sur le miroir ;

- Modification des couleurs de la partie éclairée par la lampe à fente.

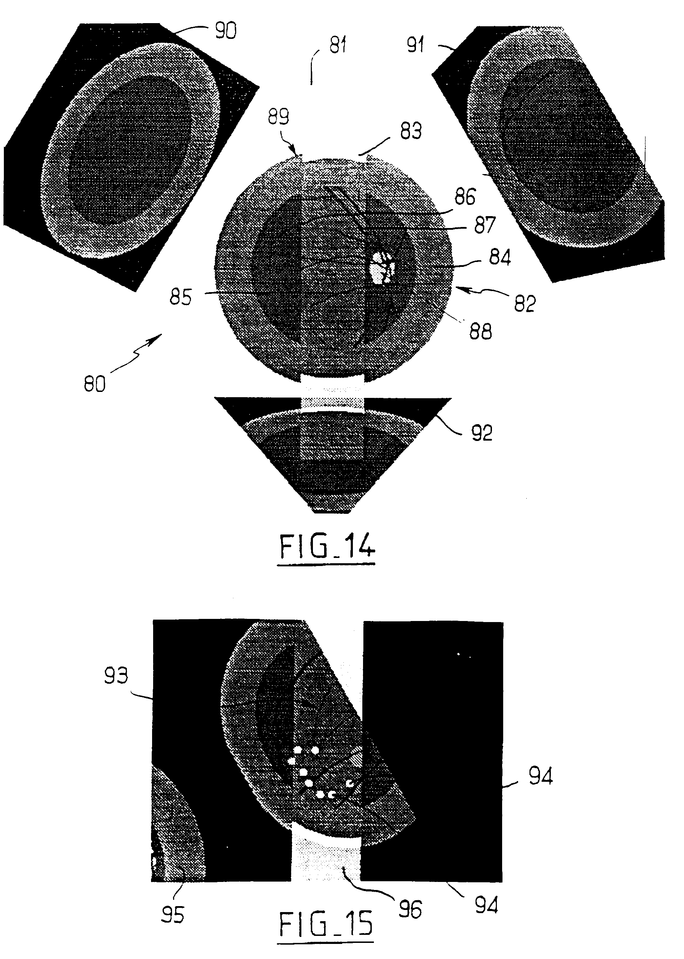

L'ensemble des objets à tracer est schématisé sur l'image ou "capture d'écran" 80, représenté sur la figure 14. Cette capture d'écran ne montre cependant pas les textures de fond d'oeil utilisées et ne sert qu'à positionner chaque élément.

La bande 81 représente la fente lumineuse émise par la lampe à fente sur le fond d'oeil 82. La section de cercle 83 figure le bord du verre central 14, la couronne grise externe 84 représentant l'iris, et le cercle interne central 85 figurant la macula.

Les veines 86 et les artères 87 ainsi que le nerf optique 88 sont également représentés.

Le verre central 89 est entouré par les images des trois miroirs répartis angulairement à 120°, à savoir le miroir 90 de moyenne périphérie, le miroir 91 de faible périphérie et le miroir 92 de grande périphérie.

La figure 15 illustre plus précisément une vue dans un des miroirs. Le fond d'oeil 93 est vu dans l'intersection de l'image de la pupille, l'image du verre central et le miroir.

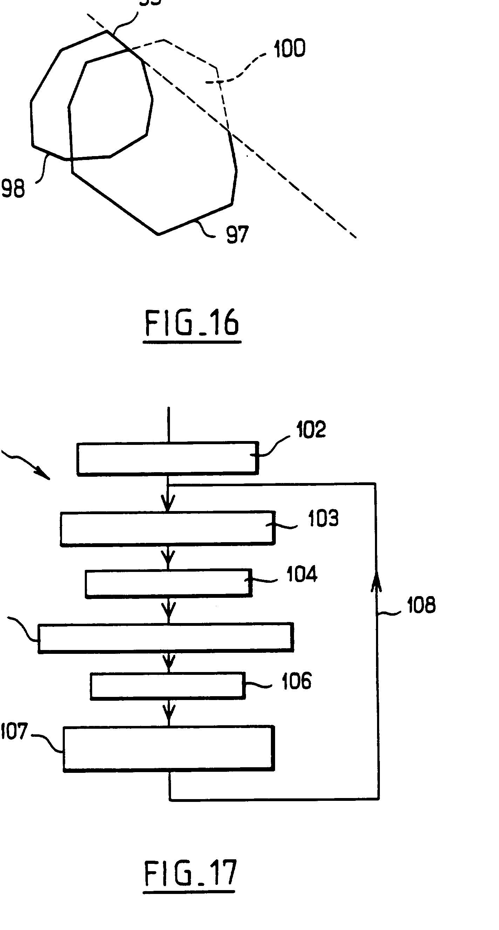

La figure 15 montre également les impacts 94. Ce sont les points clairs disséminés dans le bas de la vue. Le disque 95 se trouvant sur la gauche de la fente 96 correspond à la réflexion sur le miroir. On va maintenant décrire plus précisément le découpage des polygones mentionné ci-avant, en faisant référence à la figure 16.

Certains objets doivent par exemple être dessinés uniquement dans d'autres objets. Par exemple, l'iris est vue au travers du verre central. Seule la partie de l'iris se trouvant dans le verre doit donc être tracée.

L'ensemble des objets à tracer sont définis à l'aide de polygones : les cercles de bord de lentille, de bord du verre frontal, les miroirs, l'iris, la fente... Ils apparaissent à l'écran sous forme de contours fermés polygonaux. On tire donc profit de ces polygones, pour délimiter les zones à tracer. Par exemple, le polygone de l'iris est découpé par le polygone de la lentille centrale. L'algorithme utilisé est celui de Sutherland-Hodgman (voir figure 16).

On suppose les polygones 97 et 98 convexes et orientés dans le sens trigonométrique. Pour chaque segment 99 du polygone de découpage 98, on supprime la partie 100 du polygone 97 se trouvant du côté extérieur au segment. Cette algorithme fonctionne mieux avec des nombres réels, d'où la structure générale des segments utilisée. Une table donne par exemple ci-après le nombre de sommets et un tableau des coordonnées des sommets.

```
struct POINT_2D
{
    real x,y;
};

int nsommets;
struct POINT_2D sommet[nsommets];
```

Le découpage de deux polygones convexes bien orientés donnant un polygone convexe bien orienté, le découpage obtenu peut ensuite servir lui-même de polygone de découpage.

Les différentes étapes de l'algorithme de tracé de l'image vont maintenant être détaillées.

Cet algorithme comprend un algorithme principal 101 (voir figure 17).

Pour le mettre en oeuvre dans le mode de réalisation plus particulièrement décrit ici, on utilise une double ou un triple mémoire tampon, ou buffer en terminologie anglo-saxonne, afin de créer l'animation avec un écran visible différent de l'écran de tracé. L'algorithme 101 comprend une première étape 102 d'initialisation de l'écran, une deuxième étape 103 d'acquisition des paramètres via les capteurs, une troisième étape 104 de précalcul de la vue qui va être détaillée ci-après, et une quatrième étape 105 d'effacement de l'écran tracé. Puis on effectue l'étape 106 (voir également ci-après) de tracé (matrices, identification du point d'impact du guide, ...) avant une étape 107 d'inversion de tracé et de visualisation. Le fonctionnement est réitéré autant de fois que nécessaire (flèche 108).

Remarquons par ailleurs que, dans le mode de réalisation de l'invention plus particulièrement décrit ici, lorsqu'un tir laser est effectué, le tracé de l'image ne se fait pas pour tenir compte de l'éblouissement. Le fait de ne pas avoir à tracer de vue permet donc d'intégrer les impacts dans la texture en temps masqué.

Afin de bien simuler l'éblouissement, il faut de plus que les couleurs n'apparaissent ensuite que progressivement après les tirs. Cela veut dire que l'opérateur doit pouvoir continuer à opérer sans qu'une nouvelle vue ne soit affichée, afin de respecter la réalité.

Lors de salves de tirs en continu, les images ne sont donc plus tracées. Les précalculs continuent par contre d'être effectués pour définir l'emplacement des impacts afin de les intégrer dans la texture.

Cette méthode permet ainsi d'effectuer des salves de manière très rapide, sans être limité par la fréquence de génération des images. Un compteur devra permettre, après un certain temps, de réafficher les images, les couleurs augmentant d'intensité de manière progressive, en jouant sur la palette.

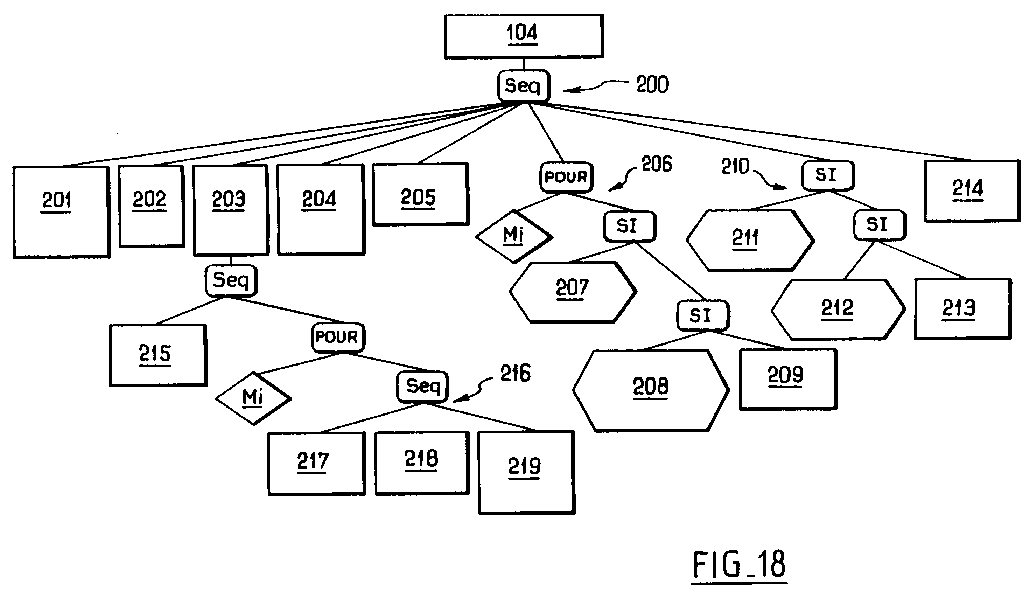

Les arbres programmatiques des algorithmes qui vont maintenant être décrits correspondent aux figures 18 à 23.

Dans ces arbres, les parties entourées en trait gras désignent des appels de procédure, faisant l'objet d'un autre arbre programmatique.

Le premier algorithme, correspondant à l'étape 104 définie ci-dessus, est l'algorithme de précalcul. Cet algorithme (voir figure 18) décrit une routine destinée à exécuter tous les calculs ne dépendant pas du tracé.

Elle est nécessaire en cas de tirs laser en salves. En effet, dans ces cas, et comme on vient de le voir, il faut continuer à faire les calculs de point d'impact du tir, sans générer de vue.

Les calculs exécutés sont essentiellement des calculs matriciels ou des calculs d'intersection. La dernière partie est constituée par le calcul des polygones de découpage, à savoir le verre frontal et la zone éclairée par la lampe à fente, ces polygones étant par ailleurs restreints à l'écran, ce qui permet par la suite d'éviter d'effectuer des tests d'appartenance à l'écran pour tout ce que l'on va tracer.

Plus précisément, cet algorithme réalise séquentiellement (200) :

- le calcul de la matrice de transformation du verre à trois miroirs (201),
- le calcul de la direction du rayonnement laser (202),
- le calcul des paramètres du verre à trois miroirs (203),
- le calcul de la nouvelle position des points de l'oeil (204),
- le calcul des normales à chaque facette (205),
- l'arborescence 206 qui pour chaque miroir (Mi), si le laser se réfléchit sur le miroir (207) et si le laser après réflexion passe par le verre central et l'iris (208), entraîne le calcul (209) de l'impact sur l'oeil,
- l'arborescence 210 qui, si le laser ne se réfléchit pas (211) et si le laser passe par le verre central et l'iris (212), entraîne le calcul (213) de l'impact sur l'oeil,
- et enfin le calcul des polygones de découpage (214).

Le calcul des paramètres du verre à trois miroirs (203) se déroule quant-à-lui séquentiellement en fonction de la position de la lentille centrale (215), et pour chaque miroir (Mi), comprend les opérations séquentielles 216 de calcul des sommets (217), de calcul de la normale (218) et de calcul de l'image de l'origine dans le miroir (219).

Le principe général de l'algorithme de tracé correspondant à l'étape 106 va être maintenant décrit.

L'objet étant toujours à tracer dans une certaine zone, on le restreint donc à cette zone, on le trace, et on définit ensuite la zone dans laquelle il faudra dessiner l'objet suivant.

Ainsi, si le verre central est invisible, alors rien n'est visible et le programme s'arrête. Sinon, le bord du verre doit être tracé dans la zone couverte par le verre frontal, et ainsi de suite.

On utilise pour ce faire la routine de découpage de polygones décrits ci-dessus. Il faut cependant noter que l'iris, respectivement le fond d'oeil, sont tracés à l'intersection de la lentille centrale, respectivement de la pupille, avec la zone éclairée par la lampe à fente.

Ainsi pour l'iris, la détermination du polygone de découpage sera plus complexe, puisque c'est l'intersection de la zone éclairée et de la lentille centrale découpée.

Ce n'est par contre pas le cas pour le fond d'oeil car le programme utilise alors le polygone de découpage de l'iris, lui-même découpé par la zone éclairée.

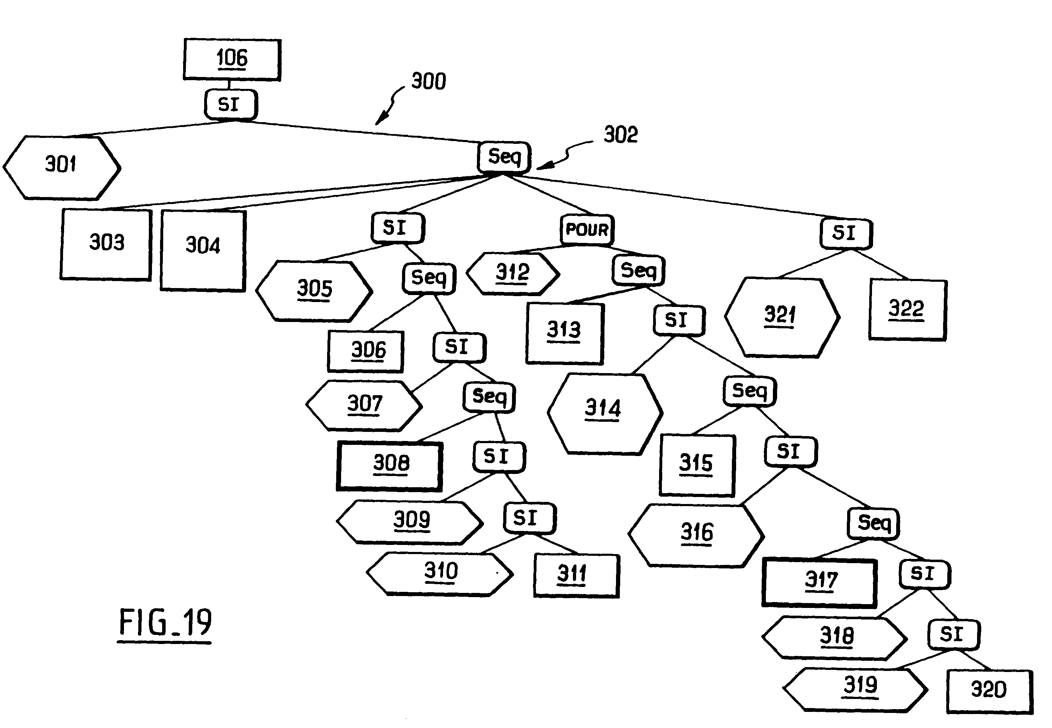

L'étape 106 de tracé va maintenant être détaillée en décrivant l'algorithme 300 en référence à la figure 19.

Si le verre frontal est visible (301), on réalise alors séquentiellement (302) les opérations suivantes :

- tracé du bord frontal du verre frontal (303) ;
- tracé du bord de la lentille centrale (304) ;
- si la lentille centrale est visible (305), alors séquentiellement on trace l'iris (306) et si la pupille est visible (307), on trace séquentiellement le fond de l'oeil (étape 308 détaillée ci-après) ; si le laser touche le fond de l'oeil (309) et si le laser est visible (310), alors on trace le guide laser (311) ;
- pour chaque miroir (312), on trace séquentiellement le contour du miroir (313) et si l'image de la lentille centrale est visible (314), on trace séquentiellement l'image de l'iris (315), et si la pupille est visible dans le miroir (316), on trace séquentiellement l'image du fond de l'oeil (étape 317), et si le laser touche le fond d'oeil (318) et si l'image du guide est visible (319), on trace le guide laser (320) ;
- enfin, si le laser se réfléchit dans un miroir (321), il y a tracé de la réflexion du laser (322).

Le tracé du fond d'oeil (étape 308), vu directement, ou celui vu au travers du miroir (étape 317), sont sensiblement identiques.

Dans le cas du tracé du fond d'oeil au travers du miroir, il faut simplement calculer l'image de l'icosaèdre dans le miroir. L'orientation étant inversée, on tient compte du calcul des orientations des faces, et on inverse l'ordre des points pour les conserver dans le sens trigonométrique.

Les facettes sont éliminées si elles sont mal orientées, sinon, on les découpe avec le polygone de découpage de la pupille éclairée. Dans la même routine, on calcule les fonctions qui régissent les paramètres u et v de la texture. Ces paramètres étant linéaires, on a, pour (x,y) point à l'écran :

$$u(x,y) = \alpha_u x + \beta_u Y + \gamma_u$$

$$v(x,y) = \alpha_v x + \beta_v y + \gamma_v$$

On détermine alors la valeur des paramètres des deux fonctions en plaçant les valeurs des textures (connues, correspondant aux indices dans la table de texture) au sommet des triangles. Pour des raisons de sécurité de lecture dans la table de textures, on définit un triangle plus large pour le calcul des paramètres en appliquant une homothétie à partir du barycentre du triangle.

Le polygone à texturer que l'on obtient alors est le triangle découpé. Ce n'est donc en général plus un triangle. On utilise alors le barycentre de ce polygone pour le découper en sous-triangles élémentaires. Grâce aux fonctions calculées ci-dessus, on calcule ensuite la valeur des paramètres u et v aux sommets de ces sous-triangles, et on affiche le sous-triangle à l'écran.

Pour chacun de ces sous-triangles, la texture est interpolée bilinéairement. Afin de générer le flou, on interpole entre deux niveaux de flou, précalculés de manière exacte comme décrit ci-avant.

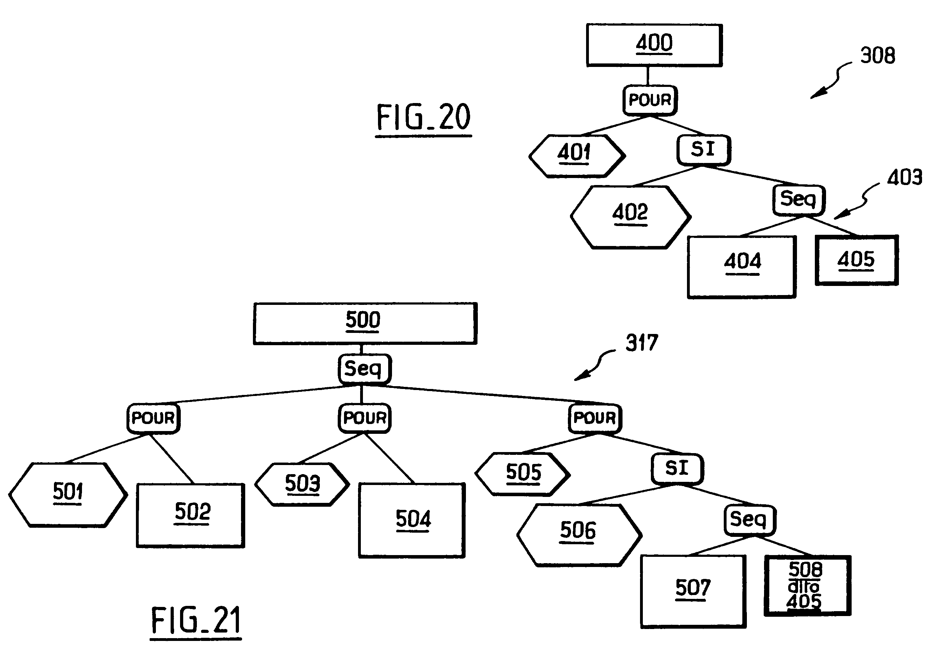

Plus précisément, la figure 20 montre l'étape 308 de tracé du fond d'oeil (400).

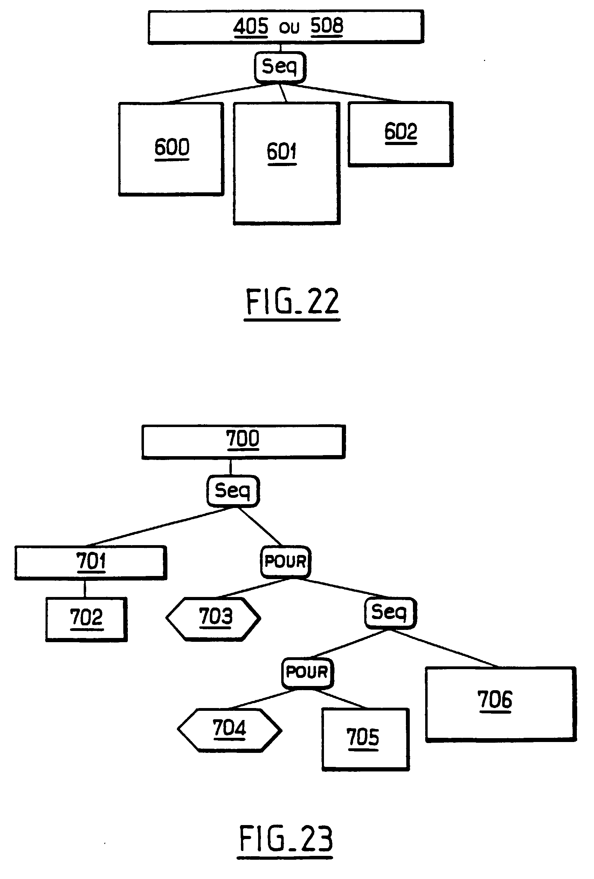

Pour chaque facette (401), si la facette est bien orientée (402), on réalise séquentiellement (403) le calcul de la projection de la facette en (404) et le tracé de la facette (405) qui va être détaillé en référence à la figure 22.

La figure 21 montre l'étape 317 de tracé du fond d'oeil dans un miroir (500).

On réalise séquentiellement :

- pour chaque point de l'icosaèdre (501), le calcul (502) de l'image du point,
- pour chaque facette (503), le calcul (504) de la normale à l'image de la facette,
- pour chaque facette (505), si l'image de la facette est bien orientée (506), le calcul séquentiel de la projection de l'image de la facette (507) et le tracé de l'image de la facette (508) identique à celui du tracé en vue directe (405).

Les tracés (405) ou (508) d'une facette décrits en référence à la figure 22, consistent à réaliser séquentiellement les opérations suivantes :

- découpage du triangle projeté et détermination de la partie à afficher (600),
- calcul du barycentre, agrandissement et calcul des équations des paramètres de la texture (601), et
- affichage de la partie visible de la facette (602).

L'affichage (700) d'une facette découpée (voir figure 23) consiste quant-à-lui à réaliser séquentiellement le découpage en triangle 701, puis le calcul du barycentre (702), puis pour chaque triangle (703), on réalise séquentiellement pour les trois sommets (704), le calcul des paramètres de texture (705), et l'affichage du triangle avec interpolation bilinéaire de la texture et interpolation du flou (706).

Concernant le tracé du verre central, le verre est modélisé par un cercle.

On considère donc trois points : le centre C et deux rayons orthogonaux A et B. On calcule les nouvelles coordonnées de C, A, et B par l'intermédiaire de la matrice Mat calculée précédemment. On remplit alors à l'écran, dans la couleur du fond de l'oeil, le polygone dont les sommets sont les projections des points

$$M(\theta) = c + \cos\theta A + \sin\theta B.$$

On choisit par exemple de tracer avec 30 points.

Le bord du verre est quant-à-lui représenté par un anneau. Il est traité en considérant l'espace compris entre les deux cercles polygonalisés. Les deux cercles sont identifiés et découpés séparément, les deux polygones découpés étant ensuite reconstitués, en rajoutant la liaison entre les deux.

L'iris étant également un anneau, le mode de tracé est identique, seul un calcul de translation étant cependant effectué dans ce cas (Mat décrit les mouvements du verre, pas de l'oeil).

En résumé, le polygone défini par le cercle central de l'iris et découpé par le bord de la lentille, éventuellement par le bord d'un miroir et par le bord du verre frontal, définit la zone de fond d'oeil à texturer.

Concernant le tracé du rayonnement laser, on se trouve devant deux cas possibles. Soit le rayonnement laser arrive directement sur le verre, soit il passe par l'un des miroirs du verre. Dans tous les cas, on obtient l'emplacement du spot sur le fond d'oeil. Des algorithmes booléens indiquent lors du tracé, de façon aisément réalisable par l'homme du métier, si d'une part il y a intersection avec le fond d'oeil, et si d'autre part le rayonnement laser a été réfléchi auparavant par le miroir.

Ainsi lors des différents tracés, on teste si le spot laser est dans la zone, comme tout autre objet du fond d'oeil. Cette opération permet d'afficher le spot sur toutes les vues : il peut, en effet, arriver que le spot soit vu dans un miroir et dans le verre central en même temps.

S'il y a réflexion sur un miroir, on affiche également la trace de cette réflexion. Celle ci est difficilement vue en temps normal, mais se voit très bien lors d'un tir.

Afin de donner un aspect "translucide" au spot, on choisit avantageusement de le dessiner avec un motif de quadrillé. Ainsi, un point sur deux est affiché de la couleur du spot, les autres points n'étant pas modifiés.

Les impacts sont d'une part stockés en mémoire pour l'évaluation, et d'autre part stockés dans la texture pour l'affichage.

Dans le mode de réalisation plus particulièrement décrit ici, appliqué à l'enseignement, deux micro-ordinateurs compatibles PC reliés par réseau Ethernet sont utilisés.

Le premier est un modèle de type DX2-66, équipé d'une carte graphique local bus dont la sortie est dédoublée sur deux ou trois écrans distincts (un ou deux écrans miniaturisés, par exemple du type fabriqué par la socité HITACHI sous la référence EVF VMH 39E, pour la visée dans le binoculaire, un écran pour le contrôle de l'expert).

Fonctionnant sous le système d'exploitation connu sous la dénomination MS-DOS, il pilote le fonctionnement des programmes du dispositif de simulation.

Le second ordinateur assure l'interface avec l'utilisateur par l'intermédiaire du logiciel d'accompagnement pédagogique. Fonctionnant sous l'interface graphique connu sous la dénomination Windows, de la société américaine MICROSOFT, il supervise le premier ordinateur en lui transférant les paramètres spécifiques d'une exécution particulière de la session. Il gère de ce fait les bases de données associées au dispositif.

De nombreuses applications sont envisageables avec un dispositif selon l'invention.

Le dispositif de simulation est, dans sa première utilisation, dédié à l'apprentissage de la photo-coagulation de lésions du fond d'oeil. Il va donc permettre d'enseigner les anomalies du fond d'oeil susceptibles de bénéficier de ce traitement laser.

Une phase de reconnaissance des anomalies présentes est tout d'abord effectuée. Il s'agit là d'une phase de présentation de diverses situations normales ou anormales. Cette étape peut d'ailleurs être utilisée dans l'enseignement de la pathologie rétino-vitréenne sans forcément aboutir à l'étape de la photo-coagulation.

La deuxième phase, une fois faite l'analyse du fond d'oeil, est la phase de traitement des anomalies. Tous types de pathologies pouvant être soignées par photo-coagulation par laser est simulable, à savoir la rétinopathie diabétique, l'occlusion veineuse, les anomalies de la périphérie rétinienne (givre, palissage, trous, déchirures ...), la dégénérescence maculaire exsudative liée à l'âge (DMLA en initiales) etc.

L'ensemble des paramètres de la photo-coagulation sont alors simulés dans leurs programmations, tout comme ses effets sur la rétine (temps, diamètre, puissance), tels que le surdosage, le sous-dosage, les erreurs de temps, une mauvaise localisation, les erreurs de diamètres, les effets de cicatrisation des spots laser, etc.

L'invention peut par ailleurs également être utilisée pour l'évaluation de la séance de photo-coagulation.

L'expert responsable détermine le bon geste, c'est-à-dire les paramètres corrects de photo-coagulation et les anomalies devant être traitées. Il peut, s'il le désire, utiliser une bibliothèque de cas standards.

Cette base de référence sert à l'évaluation de la séance de laser. La progression dans l'apprentissage se fait par étapes ou niveaux qu'il faudra valider avant de passer au suivant. Chaque séance pouvant être revue, l'expert responsable peut expliquer les erreurs éventuelles.

L'invention permet également la préparation de mission délicate.

L'importance et l'obligation de résultats lors d'une séance de photo-coagulation imposent une parfaite maîtrise des paramètres du laser. Mais la réponse de l'anomalie au traitement est parfois insuffisante ou imprévue (exemple des membranes néovasculaires de la DMLA).

Il est alors séduisant de pouvoir prévoir l'effet de la photo-coagulation. C'est la notion de "préparation de mission délicate". A partir d'une numérisation du fond d'oeil à traiter réellement, un "prétraitement" est effectué avec les paramètres que l'on pense les mieux adaptés. Le simulateur affiche alors le résultat du laser. Une autre possibilité est de demander les paramètres les plus efficaces pour cette anomalie ; l'appareil servant ainsi d'"aide à l'expert".

En ce qui concerne l'optimisation de la photo-coagulation, rappelons que le but de la photo-coagulation est de traiter le plus efficacement possible avec le minimum d'effets néfastes. A partir d'une analyse colorimétrique du fond d'oeil à traiter on pourra déterminer les seuils maximum et minimum des spots laser en fonction de leur taille et temps d'exposition. Cela évitera la phase de montée progressive en puissance actuellement obligatoire.

Le dispositif et le procédé selon l'invention sont par ailleurs d'excellents outils d'enseignement. Ils permettent de projeter dans le binoculaire l'ensemble de la séméiologie ophtalmologique, et notamment les paupières, le segment antérieur simulant la conjonctivite, la cornée, la chambre antérieure, l'angle camérulaire, le cristallin, l'iris, ainsi que le segment postérieur (vitré, rétine nerf optique ...).

Toutes les pathologiques oculaires peuvent donc être enseignées par ce moyen, tel que par exemple les dystrophies de cornée, le glaucome, la cataracte, les tumeurs, etc.

Comme il va de soi et comme il résulte de ce qui précède, la présente invention n'est pas limitée aux modes de réalisation plus particulièrement décrits ici. Elle en embrasse au contraire toutes les variantes et notamment celles où l'organe examiné ou traité à l'aide d'un binoculaire concerne un autre domaine que celui de l'ophtalmologie, comme le domaine de la neuro-chirurgie, de l'otho-rhino-laryngologie, de l'obstétrique ou de la coelioscopie, pour peu que les modifications structurelles à apporter dans le cadre de ces applications soient à la portée de l'homme du métier.

**Revendications**

1.  Dispositif (1) de simulation d'une intervention sur un organe par un opérateur (2), comportant

    -   un binoculaire (3) d'observation de l'organe connu en lui même. muni d'un système (4) de palonnier actionnable manuellement par l'opérateur, ledit système étant agencé pour déplacer le binoculaire dans un repère trirectangle Ox, Oy, Oz,

    caractérisé par des moyens de simulation, y compris des moyens de synthèse d'une image informatique de l'organe, ces moyens comportant :

    -   des moyens (8) de simulation d'une lampe à fente et des moyens (15) de simulation des moyens de réglage du dimensionnement de ladite lampe à fente, propre à éclairer l'organe,
    -   des moyens (8) de simulation d'une optique de grossissement,
    -   un ou deux écrans vidéo miniaturisés solidaires du binoculaire,
    -   des moyens (8) de calcul propres à générer une image vidéo de l'organe simulé à examiner et à projeter ladite image sur le ou lesdits écrans vidéo miniaturisés,
    -   et des moyens de simulation d'un verre (16) d'examen de l'organe muni de moyens (12) d'actionnement manuel par un opérateur agencés pour simuler le déplacement relatif dudit verre d'examen simulé, par rapport à ladite image vidéo,

    lesdits moyens de simulation et lesdits moyens de calcul étant agencés pour que le changement par l'opérateur de l'un quelconque des paramètres relatifs au déplacement du binoculaire, au réglage de la lampe à fente, au grossissement et au verre d'examen, modifie l'image vidéo de l'organe simulé en temps réel ou sensiblement en temps réel.

2.  Dispositif selon la revendication 1, caractérisé en ce que il comporte de plus des moyens de simulation d'un rayonnement laser, comportant un élément de commande mobile actionnable par l'opérateur, et des moyens de simulation de l'impact dudit rayonnement laser sur l'organe lorsque l'opérateur agit sur ledit élément de commande mobile.

3.  Dispositif selon la revendication 2, caractérisé en ce que les moyens de simulation du rayonnement laser comportent des moyens permettant de simuler la taille du point d'impact, l'intensité et la durée dudit rayonnement, l'élément de commande mobile comportant des moyens de réglage de la position du point d'impact sur l'image vidéo de l'organe simulé, lesdits moyens de réglage comprenant un micro-manipulateur agencé pour agir sur un miroir de déflexion simulé, mobile autour de deux axes perpendiculaires.

4.  Dispositif selon l'une quelconque des revendications précédentes, caractérisé en ce que les moyens de simulation de la lampe à fente comprennent des moyens de simulation de la hauteur et de la largeur de la fente, et des moyens de simulation de la puissance de la lampe.

5.  Dispositif selon l'une quelconque des revendications précédentes, caractérisé en ce que les moyens de simulation comportent un ensemble de capteurs potentiométriques agencés pour coder les informations décrivant lesdits paramètres et pour les transmettre auxdits moyens de calcul.

**6.** Dispositif selon l'une quelconque des revendications précédentes, caractérisé en ce que il comporte un capteur unique constitué par un système potentiométrique à trois axes, agencé pour repérer entièrement dans un repère de référence dit repère absolu, la position angulaire absolue desdits moyens d'actionnement manuel agencés pour simuler le déplacement relatif du verre d'examen par rapport à l'image vidéo de l'organe.

**7.** Dispositif selon l'une quelconque des revendications précédentes, caractérisé en ce que il comporte de plus des moyens d'enregistrement du déroulement de l'intervention simulée sur l'organe.

**8.** Dispositif selon l'une quelconque des revendications précédentes, caractérisé en ce que l'organe dont les susdits moyens de synthèse fournissent une image informatique est un fond d'oeil. et que le verre d'examen simulé est un verre à trois miroirs dont les mouvements sont décrits par trois rotations, l'une autour de son axe de révolution et les deux autres autour du centre de la cornée de l'oeil dont le fond est simulé, respectivement dans un plan horizontal et dans un plan vertical, la lentille sphérique étant modélisée par un cercle dans un plan et les trois miroirs par trois plans.

**9.** Dispositif selon la revendication 8, caractérisé en ce que les moyens de calcul propres à générer une image vidéo du fond d'oeil simulé à examiner sont agencés pour générer une telle image à partir d'au moins une photographie numérisée, le modèle d'oeil utilisé étant une sphère découpée en facettes dont l'iris est modélisé par un anneau plat.

**10.** Dispositif selon la revendication 8, caractérisé en ce que les moyens de calcul propres à générer une image vidéo de l'oeil sont agencés pour reconstituer une image complète de l'oeil à partir de plusieurs photographies numérisées, en juxtaposant lesdites photographies bord à bord tout en cherchant à respecter la continuité des vaisseaux sanguins.

**11.** Procédé de simulation d'une intervention sur un organe par un opérateur, ledit opérateur utilisant un binoculaire d'observation de l'organe muni d'un système de palonnier actionnable manuellement et agencé pour déplacer le binoculaire dans un repère trirectangle Ox, Oy, Oz, caractérisé en ce que

on simule par le calcul la présence d'une lampe à fente et le dimensionnement de ladite lampe à fente,
on simule par le calcul une optique de grossissement,
on génère par le calcul une image vidéo de l'organe simulé à examiner et
on projette ladite image sur un écran vidéo miniaturisé solidaire du binoculaire,
on simule par le calcul un verre d'examen de l'organe simulé et on simule le déplacement relatif dudit verre d'examen simulé par rapport à ladite image vidéo, par actionnement d'une commande manuelle par l'opérateur, lesdites simulations étant agencées pour que le changement de l'un quelconque des paramètres relatifs au déplacement du binoculaire, au réglage de la lampe à fente, au grossissement et au verre d'examen, modifie l'image vidéo de l'organe simulé en temps réel ou sensiblement en temps réel.

**12.** Procédé selon la revendication 11, caractérisé en ce que on simule de plus par le calcul un rayonnement laser, dont le fonctionnement et le déplacement simulés sont actionnés par l'opérateur agissant sur un élément de commande mobile,
et on simule par le calcul l'impact dudit rayonnement laser sur l'organe lorsque l'opérateur agit sur ledit élément de commande mobile.

**13.** Procédé selon la revendication 12, caractérisé en ce que, lors de la simulation du rayonnement laser, on simule par le calcul la taille du point d'impact dudit rayonnement, son intensité et sa durée, et on règle la position du point d'impact sur l'image vidéo de l'organe simulé par actionnement sur un micro-manipulateur agencé pour agir sur un miroir de déflexion simulé mobile autour de deux axes perpendiculaires.

**14.** Procédé selon l'une quelconque des revendications 12 et 13, caractérisé en ce que on intègre les impacts du rayonnement laser dans l'image vidéo simulée, sans tracer ladite image sur l'écran en cours de tir, et on simule l'éblouissement observé après un tir laser en faisant réapparaître progressivement les couleurs de l'organe de ladite image vidéo simulée.

**15.** Procédé selon l'une quelconque des revendications 11 à 14, caractérisé en ce que, lors de la simulation de la lampe à fente, on simule la hauteur et la largeur de la fente, et la puissance de la lampe.

**16.** Procédé selon l'une quelconque des revendications 11 à 15, caractérisé en ce que on code les informations décrivant lesdits paramètres par l'intermédiaire d'un ensemble de capteurs et on les transmet aux moyens de calcul générant l'image vidéo de l'organe simulé propres à projeter ladite image simulée sur ledit écran miniaturisé solidaire du binoculaire en modifiant ladite image en temps réel, en fonction desdits paramètres.

**17.** Procédé selon l'une quelconque des revendications 11 à 16, caractérisé en ce que pour générer l'image vidéo de l'organe simulé à examiner à partir d'un fichier de données image sur l'organe,

on identifie pour chaque point d'image quatre degrés de liberté, à savoir la longitude ($\varphi$), la latitude ($\theta$), la rotation image ($\upsilon$) et l'éloignement ($\chi$),
pour chaque point d'image on calcule une fonction $f(\varphi,\theta,\nu;\chi)$ permettant d'obtenir un point dans la carte de l'organe à visualiser,
on illumine ce point à l'écran d'un ordinateur utilisé avec sa couleur préalablement définie,
on vérifie visuellement sur l'écran la cohérence de raccordement entre fichiers adjacents à visualiser,
tant que le résultat n'est pas satisfaisant, on change les valeurs de $\varphi$, $\theta$, $\nu$ et X et on réitère les calculs et l'affichage jusqu'à ce que le résultat soit satisfaisant, auquel cas on réalise alors l'assemblage de l'image.

**18.** Procédé selon l'une quelconque des revendications 11 à 17, caractérisé en ce que on génère un flou de l'image vidéo en calculant plusieurs textures d'image et en traçant la couleur d'un pixel d'image à partir d'une interpolation linéaire entre deux textures consécutives.

**19.** Procédé selon l'une quelconque des revendications 11 à 18, caractérisé en ce que pour tracer une partie de l'organe simulé dans une autre partie appartenant audit organe, on utilise un découpage en polygones mettant en oeuvre l'algorithme de Sutherland-Hodgman.

**20.** Procédé selon l'une quelconque des revendications 11 à 19, caractérisé en ce que on repère entièrement la position angulaire de la commande manuelle actionnée pour simuler. le déplacement relatif du verre d'examen simulé par un seul capteur.

**21.** Procédé selon l'une quelconque des revendications 11 à 20, caractérisé en ce que on enregistre le déroulement de l'intervention simulée sur l'organe.

**22.** Procédé selon l'une quelconque des revendications 11 à 21, caractérisé en ce que l'organe étant un fond d'oeil, pour simuler le verre d'examen, on simule un verre à trois miroirs dont les mouvements sont décrits par trois rotations. l'une autour de son axe de révolution et les deux autres autour du centre de la cornée du fond d'oeil simulé, respectivement dans un plan horizontal et dans un plan vertical, en modélisant la lentille sphérique par un cercle dans un plan et les trois miroirs par trois plans.

**23.** Procédé selon la revendication 22, caractérisé en ce que on génère une image vidéo de l'oeil simulé à examiner à partir d'au moins une photographie numérisée, le modèle d'oeil utilisé étant une sphère découpée en facettes dont l'iris est modélisé par un anneau plat.

**24.** Procédé selon la revendication 23, caractérisé en ce que on génère ladite image vidéo de l'oeil en reconstituant une image complète de l'oeil à partir de plusieurs photographies numérisées, et en juxtaposant lesdites photographies bord à bord tout en cherchant à respecter la continuité des vaisseaux sanguins.

**Patentansprüche**

**1.** Vorrichtung (1) zur Simulation eines Eingriffs an einem Organ durch einen Operateur (2), mit

- einem an sich bekannten binokularen Mikroskop (3) zur Betrachtung des Organs, das mit einem vom Operateur manuell betätigbaren Steuerhebel-System (4) versehen ist, welches so ausgelegt ist, daß es das binokulare Mikroskop in einem Bezugssystem mit drei zueinander rechtwinklig stehenden Achsen Ox, Oy, Oz verstellen kann,

gekennzeichnet durch Simulationseinrichtungen, einschließlich Einrichtungen zur Synthese eines durch Datenverarbeitung entstehenden Bildes des Organs, wobei diese Einrichtungen umfassen:

- Einrichtungen (8) zur Simulation einer Spaltlampe und Einrichtungen (15) zur Simulation von Mitteln zum Einstellen der Abmessungen der genannten, zur Beleuchtung des Organs geeigneten Spaltlampe,
- Einrichtungen (8) zur Simulation einer Vergrößerungsoptik,
- einen oder zwei mit dem binokularen Mikroskop fest verbundene(n) miniaturisierte(n) Bildschirme,
- Recheneinrichtungen (8) zum Generieren eines Videobildes des zu untersuchenden simulierten Organs und zum Projizieren des genannten Bildes auf den oder die miniaturisierte(n) Bildschirm(e),
- und Einrichtungen zur Simulation eines Glases (16) zur Untersuchung des Organs, das mit Mitteln (12) zum manuellen Betätigen durch einen Operateur versehen ist, die so ausgelegt sind, daß sie die relative Verstellung des genannten simulierten Untersuchungsglases in bezug auf das genannte Videobild simulieren,

wobei die genannten Simulationseinrichtungen und Recheneinrichtungen so ausgelegt sind, daß die Änderung durch den Operateur eines beliebigen der Parameter, die sich auf die Verstellung des binokularen Mikroskops, die Einstellung der Spaltlampe, die Vergrößerung und das Untersuchungsglas beziehen, das Videobild des simulierten Organs in Echtzeit oder zumindest annähernd in Echtzeit verändert.

2. Vorrichtung nach Anspruch 1,
dadurch gekennzeichnet, daß sie ferner Einrichtungen zur Simulation einer Laserstrahlung aufweist, die ein vom Operateur betätigbares bewegliches Steuerorgan umfassen, und Einrichtungen zur Simulation des Auftreffens der genannten Laserstrahlung auf dem Organ, wenn der Operateur das genannte bewegliche Steuerorgan betätigt.

3. Vorrichtung nach Anspruch 2,
dadurch gekennzeichnet, daß die Einrichtungen zur Simulation der Laserstrahlung Mittel aufweisen, die das Simulieren der Größe des Auftreffpunktes, die Intensität und die Dauer der genannten Strahlung ermöglichen, wobei das bewegliche Steuerorgan Mittel zum Einstellen der Lage des Auftreffpunktes auf dem Videobild des simulierten Organs aufweist, wobei die genannten Einstellmittel einen Mikromanipulator umfassen, der so ausgelegt ist, daß er auf einen simulierten, um zwei zueinander rechtwinklig stehende Achsen beweglichen Ablenkspiegel wirkt.

4. Vorrichtung nach einem der vorhergehenden Ansprüche,
dadurch gekennzeichnet, daß die Einrichtungen zur Simulation der Spaltlampe Einrichtungen zur Simulation der Höhe und der Breite des Spaltes und Einrichtungen zur Simulation der Stärke der Lampe umfassen.

5. Vorrichtung nach einem der vorhergehenden Ansprüche,
dadurch gekennzeichnet, daß die Einrichtungen zur Simulation eine Anordnung von Potentiometergebern aufweisen, welche die die genannten Parameter beschreibenden Informationen zu codieren und sie zu den Recheneinrichtungen zu übertragen vermögen.

6. Vorrichtung nach einem der vorhergehenden Ansprüche,
dadurch gekennzeichnet, daß sie einen einzigen Meßgeber aufweist, der von einem dreiachsigen Potentiometersystem gebildet ist, das in einem absolutes Bezugssystem genannten Bezugssystem die absolute Winkelposition der genannten manuellen Betätigungsorgane vollständig zu erfassen vermag, die ausgelegt sind, um die relative Verstellung des Untersuchungsglases in bezug auf das Videobild des Organs zu simulieren.

7. Vorrichtung nach einem der vorhergehenden Ansprüche,
dadurch gekennzeichnet, daß sie außerdem Einrichtungen zum Aufzeichnen des Ablaufs des simulierten Eingriffs am Organ aufweist.

8. Vorrichtung nach einem der vorhergehenden Ansprüche,
dadurch gekennzeichnet, daß das Organ, von dem die genannten Synthesemittel ein durch Datenverarbeitung entstandenes Bild liefern, ein Augenhintergrund ist, und daß das simulierte Untersuchungsglas ein Glas mit drei Spiegeln ist, deren Bewegungen durch drei Drehbewegungen beschrieben sind, nämlich eine um seine Rotationsachse und die beiden anderen um den Mittelpunkt der Hornhaut des Auges, dessen Hintergrund simuliert ist, in einer waagerechten bzw. in einer senkrechten Ebene, wobei die sphärische Linse durch einen Kreis in einer Ebene und die drei Spiegel durch drei Ebenen modelliert sind.

9. Vorrichtung nach Anspruch 8,
dadurch gekennzeichnet, daß die zum Generieren eines Videobildes des zu untersuchenden simulierten Augenhintergrundes geeigneten Recheneinrichtungen ausgelegt sind, um ein solches Bild anhand wenigstens einer digitalisierten Fotografie zu generieren, wobei das benutzte Augenmodell eine in Facetten aufgeteilte Kugel ist, deren Iris durch einen flachen Ring modelliert ist.

10. Vorrichtung nach Anspruch 8,
dadurch gekennzeichnet, daß die zum Generieren eines Videobildes des Auges geeigneten Recheneinrichtungen ausgelegt sind, um ein vollständiges Bild des Auges anhand mehrerer digitalisierter Fotografien wiederherzustellen, indem die genannten Fotografien Rand an Rand angeordnet werden und dabei versucht wird, die Kontinuität der Blutgefäße zu wahren.

11. Verfahren zur Simulation eines Eingriffs an einem Organ durch einen Operateur, der ein binokulares Mikroskop zur Beobachtung des Organs benutzt, welches mit einem Steuerhebel-System versehen ist, das manuell betätigbar und ausgelegt ist, um das binokulare Mikroskop in einem Bezugssystem mit drei rechtwinklig zueinander stehenden Achsen Ox, Oy, Oz zu verstellen,
dadurch gekennzeichnet, daß

durch Berechnen das Vorhandensein einer Spaltlampe und die Abmessungen der genannten Spaltlampe simuliert werden,
durch Berechnen eine Vergrößerungsoptik simuliert wird,
durch Berechnen ein Videobild des zu untersuchenden simulierten Organs generiert wird, und
das genannte Bild auf einen miniaturisierten Bildschirm projiziert wird, der mit dem binokularen Mikroskop fest verbunden ist,
durch Berechnen ein Glas zur Untersuchung des simulierten Organs simuliert wird, und
die relative Verstellung des genannten simulierten Untersuchungsglases in bezug auf das genannte Videobild durch Betätigen einer manuellen Steuerung durch den Operateur simuliert wird, wobei die genannten Simulationen so ausgebildet sind,
daß die Änderung irgendeines der Parameter, die sich auf die Verstellung des binokularen Mikroskops, die Einstellung der Spaltlampe, die Vergrößerung und das Untersuchungsglas beziehen, das Videobild des simulierten Organs in Echtzeit oder zumindest annähernd in Echtzeit ändert.

12. Verfahren nach Anspruch 11,
dadurch gekennzeichnet, daß durch Berechnen außerdem eine Laserstrahlung simuliert wird, deren simulierte Arbeitsweise und Verstellung durch Einwirken des Benutzers auf ein bewegliches Steuerorgan betätigt werden, und daß durch Berechnen das Auftreffen der genannten Laserstrahlung auf das Organ simuliert wird, wenn der Operateur das genannte bewegliche Steuerorgan betätigt.

13. Verfahren nach Anspruch 12,
dadurch gekennzeichnet, daß bei der Simulation der Laserstrahlung durch Berechnen die Größe des Auftreffpunktes der genannten Strahlung, ihre Intensität und ihre Dauer simuliert werden, und daß die Lage des Auftreffpunktes auf das Videobild des simulierten Organs durch Betätigen eines Mikromanipulators eingestellt wird, der ausgebildet ist, um auf einen simulierten Ablenkspiegel zu wirken, der um zwei zueinander rechtwinklig stehende Achsen beweglich ist.

14. Verfahren nach einem der Ansprüche 12 und 13,
dadurch gekennzeichnet, daß die Einschläge der Laserstrahlung in das simulierte Videobild integriert werden, ohne daß das genannte Bild während des Beschusses auf den Bildschirm geschrieben wird, und daß nach einem Laserbeschuß die beobachtete Blendung simuliert wird, indem man die Farben des Organs des genannten simulierten Videobildes allmählich wiederentstehen läßt.

15. Verfahren nach einem der Ansprüche 11 bis 14,
dadurch gekennzeichnet, daß bei der Simulation der Spaltlampe die Höhe und die Breite des Spaltes und die Stärke der Lampe simuliert werden.

16. Verfahren nach einem der Ansprüche 11 bis 15,
dadurch gekennzeichnet, daß die Informationen, welche die genannten Parameter beschreiben, mittels einer Anordnung von Meßgebern codiert werden, und daß sie zu den das Videobild des simulierten Organs generierenden Recheneinrichtungen übertragen werden, die geeignet sind, das genannte simulierte Bild auf den genannten, mit dem binokularen Mikroskop fest verbundenen miniaturisierten Bildschirm zu projizieren, indem sie das genannte Bild in Abhängigkeit von den genannten Parametern in Echtzeit ändern.

17. Verfahren nach einem der Ansprüche 11 bis 16,
dadurch gekennzeichnet, daß zum Generieren des Videobildes des zu untersuchenden simulierten Organs anhand einer Bilddatei des Organs

für jeden Bildpunkt vier Freiheitsgrade bezeichnet werden, nämlich Länge ($\phi$), Breite ($\Theta$), Bilddrehung ($\upsilon$) und Entfernung ($\chi$),
für jeden Bildpunkt eine Funktion $f(\phi, \Theta, \upsilon, \chi)$ berechnet wird, die es ermöglicht, in der anzuzeigenden Karte des Organs zu einem Punkt zu gelangen,
dieser Punkt auf dem Bildschirm eines benutzten Rechners mit seiner zuvor festgelegten Farbe hervorgehoben wird,
auf dem Bildschirm die Anschlußkohärenz zwischen anzuzeigenden benachbarten Dateien visuell überprüft wird,
solange das Ergebnis nicht zufriedenstellt, die Werte von $\phi$, $\Theta$, $\upsilon$ und $\chi$ geändert und die Berechnungen und die Anzeige solange wiederholt werden, bis das Ergebnis zufriedenstellt, worauf dann das Bild zusammengefügt wird.

18. Verfahren nach einem der Ansprüche 11 bis 17,
dadurch gekennzeichnet, daß eine Unschärfe des Videobildes generiert wird, indem mehrere Bildstrukturen berechnet und die Farbe eines Bildpixels anhand einer linearen Interpolation zwischen zwei aufeinanderfolgenden Strukturen geschrieben werden.

19. Verfahren nach einem der Ansprüche 11 bis 18,
dadurch gekennzeichnet, daß zum Schreiben eines Teils des simulierten Organs in einem anderen, zum genannten Organ gehörenden Teil eine Aufteilung in Polygone durch Anwendung des Sutherland-Hodgman-Algorithmus benutzt wird.

20. Verfahren nach einem der Ansprüche 11 bis 19,
dadurch gekennzeichnet, daß die Winkelstellung des betätigten manuellen Steuerorgans vollständig erfaßt wird, um die relative Verstellung des simulierten Untersuchungsglases mit einem einzigen Meßgeber zu simulieren.

21. Verfahren nach einem der Ansprüche 11 bis 20,
dadurch gekennzeichnet, daß der Ablauf des simulierten Eingriffs am Organ aufgezeichnet wird.

22. Verfahren nach einem der Ansprüche 11 bis 21,
dadurch gekennzeichnet, daß, weil das Organ ein Augenhintergrund ist, zum Simulieren des Untersuchungsglases ein Glas mit drei Spiegeln simuliert wird, deren Bewegungen durch drei Drehbewegungen beschrieben sind, nämlich eine um seine Rotationsachse und die beiden anderen um den Mittelpunkt der Hornhaut des simulierten Augenhintergrundes in einer waagerechten bzw. einer senkrechten Ebene, wobei die sphärische Linse in Form eines Kreises in einer Ebene und die drei Spiegel in Form von drei Ebenen modelliert werden.

23. Verfahren nach Anspruch 22,
dadurch gekennzeichnet, daß ein Videobild des zu untersuchenden simulierten Auges anhand wenigstens einer digitalisierten Fotografie generiert wird, wobei das benutzte Augenmodell eine in Facetten aufgeteilte Kugel ist, deren Iris durch einen flachen Ring modelliert ist.

24. Verfahren nach Anspruch 23,
dadurch gekennzeichnet, daß das genannte Videobild des Auges generiert wird, indem ein vollständiges Bild des Auges anhand mehrerer digitalisierter Fotografien wiederhergestellt wird, und indem die genannten Fotografien Rand an Rand nebeneinander angeordnet werden, wobei versucht wird, die Kontinuität der Blutgefäße zu wahren.

## Claims

1. Device (1) for simulating an intervention on an organ by an operator (2), including

- a binocular (3), known per se, for observing the organ and fitted with a control stage system (4) actuable manually by the operator, the said system being designed to displace the binocular in an orthonormal triaxial frame Ox, Oy, Oz,

characterized by simulation means, including means for synthesizing a computer image of the organ, these means including:

- means (8) for simulating a slit lamp and means (15) for simulating means for adjusting the dimensioning of the said slit lamp which is capable of illuminate the organ,
- means (8) for simulating magnifying optics,
- one or two miniaturized video screens integral with the binocular,
- computation means (8) capable of generating a video image of the simulated organ to be examined and of projecting the said image onto the said miniaturized video screen or screens,
- and means for simulating a lens (16), for examining the organ, that is fitted with means (12) for manual actuation by an operator, which are designed to simulate the relative displacement of the said simulated examination lens relative to the said video image,

the said simulation means and the said computation means being designed so that the changing by the operator of any one of the parameters relating to the displacement of the binocular, to the adjustment of the slit lamp, to the magnification or to the examination lens modifies the video image of the simulated organ in real-time or substantially in real-time.

2. Device according to Claim 1, characterized in that it furthermore includes means for simulating a laser radiation, including a mobile control element actuable by the operator, and means for simulating the impact of the said laser radiation on the organ when the operator acts on the said mobile control element.

3. Device according to Claim 2, characterized in that the means for simulating the laser radiation include means making it possible to simulate the size of the impact spot, and the intensity and the duration of the said radiation, the mobile control element including means for adjusting the position of the impact spot on the video image of the simulated organ, the said adjustment means comprising a micromanipulator designed to act on a simulated deflection mirror that can move about two perpendicular axes.

4. Device according to any one of the preceding claims, characterized in that the means for simulating the slit lamp comprise means for simulating the height and the width of the slit, and means for simulating the power of the lamp.

5. Device according to any one of the preceding claims, characterized in that the simulation means include a set of potentiometric sensors designed to encode the information describing the said parameters or to transmit it to the said computation means.

6. Device according to any one of the preceding claims, characterized in that it includes a single sensor consisting of a triaxial potentiometric system designed to register entirely in a reference frame, referred to as the absolute frame, the absolute angular position of the said manual actuation means which are designed to simulate the relative displacement of the examination lens relative to the video image of the organ.

7. Device according to any one of the preceding claims, characterized in that it furthermore includes means for recording the performance of the simulated intervention on the organ.

8. Device according to any one of the preceding claims, characterized in that the organ of which the abovementioned synthesis means supply a computer image is a bottom of the eye, and in that the simulated examination lens is a lens with three mirrors whose movements are described by three rotations, one about its axis of revolution and the other two about the centre of the cornea of the eye whose bottom is simulated, respectively in a horizontal plane and in a vertical plane, the spherical optical lens being modelled by a circle in one plane and the three mirrors by three planes.

9. Device according to Claim 8, characterized in that the computation means capable of generating a video image of the simulated bottom of the eye to be examined are designed to generate such an image from at least one digitized photograph, the eye model used being a sphere cut into facets, the iris of which is modelled by a flat ring.

10. Device according to Claim 8, characterized in that the computation means capable of generating a video image of the eye are designed to reconstruct a complete image of the eye from a plurality of digitized photographs, by juxtaposing the said photographs edge-to-edge while attempting to respect the continuity of the blood vessels.

**11.** Method for simulating an intervention on an organ by an operator, the said operator using a binocular, for observing the organ, which is fitted with a manually actuable control stage system and designed to displace the binocular in an orthonormal triaxial frame Ox, Oy, Oz, characterized in that

the presence of a slit lamp and the dimensioning of the said slit lamp are simulated by computation, magnifying optics are simulated by computation,

a video image of the simulated organ to be examined is generated by computation and the said image is projected onto a miniaturized video screen integral with the binocular,

a lens for examining the simulated organ is simulated by computation, and the relative displacement of the said simulated examination lens relative to the said video image is simulated by actuation of a manual control by the operator, the said simulations being designed so that the changing of any one of the parameters relating to the displacement of the binocular, to the adjustment of the slit lamp, to the magnification or to the examination lens modifies the video image of the simulated organ in real-time or substantially in real-time.

**12.** Method according to Claim 11, characterized in that a laser radiation is furthermore simulated by computation, the simulated operation and displacement of which are actuated by the operator acting on a mobile control element and the impact of the said laser radiation on the organ when the operator acts on the said mobile control element is simulated by computation.

**13.** Method according to Claim 12, characterized in that, during the simulation of the laser radiation, the size of the impact spot of the said radiation, and its intensity and its duration are simulated by computation and the position of the impact spot on the video image of the simulated organ is adjusted by actuation on a micromanipulator designed to act on a simulated deflection mirror which can move about two perpendicular axes.

**14.** Method according to either one of Claims 12 and 13, characterized in that the impacts of the laser radiation are integrated in the simulated video image, without plotting the said image on the screen during a shot, and the dazzling observed after a laser shot is simulated by making the colours of the organ of the said simulated video image reappear progressively.

**15.** Method according to any one of Claims 11 to 14, characterized in that, during the simulation of the slit lamp, the height and the width of the slit and the power of the lamp are simulated.

**16.** Method according to any one of Claims 11 to 15, characterized in that the information describing the said parameters is encoded by means of a set of sensors and is transmitted to the computation means, generating the video image of the simulated organ, which can project the said simulated image onto the said miniaturized screen integral with the binocular while modifying the said image in real-time as a function of the said parameters.

**17.** Method according to any one of Claims 11 to 16, characterized in that, in order to generate the video image of the simulated organ to be examined from an image data file relating to the organ,

four degrees of freedom are identified for each pixel, namely the longitude ($\varphi$), the latitude ($\theta$), the image rotation ($\nu$) and the separation ($\chi$),

for each pixel, a function $f(\varphi, \theta, \nu, \chi)$ is calculated, making it possible to obtain a point in the map of the organ to be visualized,

this point is illuminated on the screen of a computer used with its predefined colour,

the matching coherence between adjacent files to be visualized is visually checked on the screen,

if the result is not satisfactory, the values of $\varphi$, $\theta$, $\nu$, and $\chi$ are changed and the calculations and the display are reiterated until the result is satisfactory, in which case the image is assembled.

**18.** Method according to any one of Claims 11 to 17, characterized in that smoothing of the video image is generated by computing a plurality of image textures and by plotting the colour of a pixel from a linear interpolation between two consecutive textures.

**19.** Method according to any one of Claims 11 to 18, characterized in that, in order to plot one part of the simulated organ in another part belonging to the said organ, use is made of polygon cutting employing the Sutherland-Hodgman algorithm.

**20.** Method according to any one of Claims 11 to 19, characterized in that the angular position of the actuated manual control is registered fully in order to simulate the relative displacement of the simulated examination lens by a single sensor.

21. Method according to any one of Claims 11 to 20, characterized in that the performance of the simulated intervention on the organ is recorded.

22. Method according to any one of Claims 11 to 21, characterized in that, the organ being a bottom of the eye, in order to simulate the examination lens, a lens with three mirrors is simulated, the movements of which are described by three rotations, one about its axis of revolution and the other two about the centre of the cornea of the simulated bottom of the eye, respectively in a horizontal plane and in a vertical plane, by modelling the spherical optical lens by a circle in a plane and the three mirrors by three planes.

23. Method according to Claim 22, characterized in that a video image of the simulated eye to be examined is generated from at least one digitized photograph, the eye model used being a sphere cut into facets, the iris of which is modelled by a flat ring.

24. Method according to Claim 23, characterized in that the said video image of the eye is generated by reconstructing a complete image of the eye from a plurality of digitized photographs and by juxtaposing the said photographs edge-to-edge while attempting to respect the continuity of the blood vessels.

FIG.1

FIG.2

FIG.3

FIG.4

FIG.5

FIG.7

FIG.6

EP 0 758 477 B1

FIG.8

29

FIG.9A

55  54  56

FIG.9B

55  57  56

FIG.10

N  A  M

FIG.11

FIG.12

FIG.13

FIG_14

FIG_15

FIG.16

FIG.17

FIG. 18

EP 0 758 477 B1

FIG.19

EP 0 758 477 B1

EP 0 758 477 B1

FIG. 20

```
        ┌──────────┐
        │   400    │
        └────┬─────┘
          [POUR]
         ┌────┴────┐
      ⟨401⟩      [SI]
              ┌────┴────┐
          ⟨402⟩       [Seq]
                    ┌────┴────┐
               ┌──────┐  ┌──────┐
               │ 404  │  │ 405  │
               └──────┘  └──────┘
```

308

403

FIG. 21

```
              ┌──────────┐
              │   500    │
              └────┬─────┘
                [Seq]
        ┌──────────┼──────────┐
     [POUR]     [POUR]      [POUR]
    ┌───┴───┐  ┌───┴───┐   ┌───┴────┐
 ⟨501⟩  ┌────┐ ⟨503⟩ ┌────┐ ⟨505⟩  [SI]
        │502 │      │504 │       ┌───┴────┐
        └────┘      └────┘   ⟨506⟩     [Seq]
                                     ┌────┴────┐
                                 ┌────┐   ┌──────┐
                                 │507 │   │ 508  │
                                 └────┘   │ alTo │
                                          │ 405  │
                                          └──────┘
```

317

FIG.22

FIG.23